# EUROPÄISCHE PATENTSCHRIFT

(11) **EP 3 529 938 B1**
(45) Veröffentlichungstag und Bekanntmachung des Hinweises auf die Patenterteilung: **11.11.2020**
(21) Anmeldenummer: 17788196.8
(22) Anmeldetag: 24.10.2017
(51) Int. Cl.: H04L 5/00, H04B 1/7156

(54) **OPTIMIERTE SPRUNGMUSTER FÜR VERSCHIEDENE SENSORKNOTEN UND VARIABLE DATENLÄNGEN AUF BASIS DES TELEGRAM SPLITTING ÜBERTRAGUNGSVERFAHREN**
OPTIMIZED HOPPING PATTERN FOR DIFFERENT SENSORNODES AND VARIABLE DATALENGTH BASED ON THE TELEGRAM SPLITTING TRANSMISSION SYSTEM
MODÈLES DE SAUTE OPTIMISÉS POUR DES NOEUDS DE CAPTEURS DIFFERENTS ET DONNÉES DE DURÉE VARIABLE BASÉ SUR UN PROCÉDÉ DE TRANSMISSION DE TYPE TELEGRAM SPLITTING

(30) Priorität: 24.10.2016 DE 102016220882
(43) Veröffentlichungstag der Anmeldung: 28.08.2019
(73) Patentinhaber: Fraunhofer-Gesellschaft zur Förderung der angewandten Forschung e.V., 80686 München (DE); Friedrich-Alexander-Universität Erlangen-Nürnberg, 91054 Erlangen (DE)
(72) Erfinder: KILIAN, Gerd, 91058 Erlangen (DE); BERNHARD, Josef, 91058 Erlangen (DE); ROBERT, Jörg, 91054 Erlangen (DE); KNEISSL, Jakob, 91058 Erlangen (DE); WECHSLER, Johannes, 91058 Erlangen (DE)
(74) Vertreter: Schlenker, Julian
(86) Internationale Anmeldenummer: PCT/EP2017/076938
(87) Internationale Veröffentlichungsnummer: WO 2018/077770

(56) Entgegenhaltungen:
- WO-A1-2009/139724
- US-A- 6 130 885
- US-A1- 2003 140 298
- US-A1- 2005 176 371
- US-A1- 2016 044 729
- SAMSUNG: "Time-frequency hopping design for Mode 2 resource allocation", 3GPP DRAFT; R1-143085 TIME-FREQUENCY HOPPING DESIGN FOR MODE 2 RESOURCE ALLOCATION, 3RD GENERATION PARTNERSHIP PROJECT (3GPP), MOBILE COMPETENCE CENTRE ; 650, ROUTE DES LUCIOLES ; F-06921 SOPHIA-ANTIP , Bd. RAN WG1, Nr. Dresden, Germany; 20140818 - 20140822 17. August 2014 (2014-08-17), XP050788564, Gefunden im Internet: URL:http://www.3gpp.org/ftp/Meetings_3GPP_ SYNC/RAN1/Docs/ [gefunden am 2014-08-17]
- ALEX W LAM ET AL: "Time-Hopping and Frequency-Hopping Multiple-Access Packet Communications", IEEE TRANSACTIONS ON COMMUNICATIONS, IEEE SERVICE CENTER, PISCATAWAY, NJ. USA, Bd. 38, Nr. 6, 1. Juni 1990 (1990-06-01), Seiten 875-888, XP002671768, ISSN: 0090-6778, DOI: 10.1109/26.57480
- KILIAN GERD ET AL: "Increasing Transmission Reliability for Telemetry Systems Using Telegram Splitting", IEEE TRANSACTIONS ON COMMUNICATIONS, IEEE SERVICE CENTER, PISCATAWAY, NJ. USA, Bd. 63, Nr. 3, 1. März 2015 (2015-03-01), Seiten 949-961, XP011575488, ISSN: 0090-6778, DOI: 10.1109/TCOMM.2014.2386859 [gefunden am 2015-03-13]

## Beschreibung

Ausführungsbeispiele der vorliegenden Erfindung beziehen sich auf einen Datensender zum Senden von Daten. Weitere Ausführungsbeispiele beziehen sich auf einen Datenempfänger zum Empfangen von Daten. Manche Ausführungsbeispiele beziehen sich auf optimierte Sprungmuster für verschiedene Sensorknoten und variable Datenlängen auf Basis des Telegram Splitting Übertragungsverfahrens, Alle im Folgenden diskutierten Ausführungsbeispiele, die nicht durch den Umfang der angehängten Ansprüche abgedeckt werden, sind als Beispiele anzusehen, die zum besseren Verständnis der vorliegenden Erfindung beitragen.

In der DE 10 2011 082 098 B4 ist ein Verfahren für batteriebetriebene Sender beschrieben, bei dem das Datenpaket in Sendepakete unterteilt wird, die kleiner sind als die eigentliche Information, die übertragen werden soll (so genanntes Telegram Splitting (dt. Telegrammaufteilung)). Telegramme werden dabei auf mehrere Teilpakete aufgeteilt. Ein solches Teilpaket wird als Hop (dt. Sprung) bezeichnet. In einem Hop werden mehrere Informationssymbole übertragen. Die Hops werden auf einer Frequenz oder aber über mehrere Frequenzen verteilt, sog. Frequency Hopping (dt. Frequenzsprung), gesendet. Zwischen den Hops gibt es Pausen, in denen nicht gesendet wird.

In einem typischen Sensornetz werden mehrere 100.000 Sensorknoten mit nur einer Basisstation abgedeckt. Da die Sensorkhoten über nur sehr kleine Batterien verfügen, ist eine Koordination der Übertragungen in den meisten Fällen kaum möglich, Durch das Telegram Splitting Verfahren wird hierfür eine sehr hohe Übertragungssicherheit erreicht.

Im Idealfall besitzt jeder Sensorknoten ein eigenes Sprungmuster (in Zeit und ggf. in der Frequenz), so dass eine vollständige Überlagerung zweier Telegramme nicht möglich ist. Aufgrund von begrenzter Rechenleistung in der Basisstation ist es jedoch nicht möglich beliebig viele Sprungsequenzen zu verwenden. Hierdurch kommt es bei gleichzeitiger Aussendung zweier Telegramme von zwei Sensorknoten zu einer vollständigen Überlagerung der Telegramme, Von diesen beiden Telegrammen ist im Normalfall eine korrekte Dekodierung von nur einem oder keinem der beiden Telegramme möglich.

In der DE 10 2011 082 100 A1 wird eine Basisstation mit einer bidirektionalen Datenübertragung zu einem Knoten beschreiben. Die Basisstation weist eine Einrichtung zum Empfangen eines von dem Knoten mit einer Knoten-Sendefrequenz gesendeten Datenpakets auf, wobei die Knoten-Sendefrequenz von einem Frequenzgeber des Knotens abgeleitet ist. Ferner weist die Basisstation eine Einrichtung zum Ermitteln der Knoten-Sendefrequenz basierend auf dem empfangenen Datenpaket und zum Ermitteln einer Abweichung des Frequenzgebers des Knotens basierend auf einer Frequenzabweichung zwischen der ermittelten Knoten-Sendefrequenz und einer dem Knoten zugeordneten Soll-Knoten-Sendefrequenz auf. Des Weiteren weist die Basisstation eine Einrichtung zum Senden eines Datenpakets zu dem Knoten mit einer Basisstation-Sendefrequenz auf, wobei die Einrichtung zum Senden des Datenpakets ausgebildet ist, um die Basisstation-Sendefrequenz basierend auf der ermittelten Abweichung des Frequenzgebers des Knotens einzustellen.

In der WO 2015/128385 A1 wird eine Datensendeanordnung beschrieben, die ein Energy-Harvesting-Element als Energiequelle aufweist. Die Datensendeanordnung ist dabei ausgebildet, um Daten unter Verwendung des Telegram Splitting Verfahrens zu senden, wobei ein zum Senden anstehendes Teilpaket in Abhängigkeit von einer von der Energieversorgungseinrichtung bereitstellbaren elektrischen Energiemenge entweder gesendet wird, zwischengespeichert und später gesendet wird, oder verworfen wird.

In der Veröffentlichung [G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013] wird eine verbesserte Reichweite für Niedrigenergietelemetriesysteme, die das Telegram Splitting Verfahren verwenden, beschrieben.

In der Veröffentlichung [G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015] wird eine verbesserte Übertragungssicherheit für Niedrigenergietelemetriesysteme, die das Telegram Splitting Verfahren verwenden, beschrieben.

In der Veröffentlichung [Sam Dolinar, Dariush Divsalar, and Fabrizio Pollara, "Turbo Code Performance as a Function of Code Block Size", 1998 IEEE International Symposium on Information Theory] wird die Leistungsfähigkeit von Turbo Codes in Abhängigkeit von einer Blockgröße beschrieben.

Die US 2005/0176371 A1 bezieht sich auf die Übertragung von Daten in einem Kurzstreckenkommunikationssystem. Zur Übertragung der Daten wird ein Zeit-Frequenz-Code (time frequency code, TFC) verwendet, bei dem einzelne OFDM Symbole in unmittelbar aufeinander folgenden Zeitschlitzen in unterschiedlichen Frequenzbändern übertragen werden.

Die WO 2009/139724 A1 bezieht sich auf ein Verfahren zum Übertragen von OFDM-Symbolen durch mehrere Ad-hoc-Funkkommunikationsgeräte in einer Gruppe von Ad-hoc-Funkkommunikationsgeräten. Ein erstes Ad-hoc-Funkkommunikationsgerät der Gruppe von Ad-hoc-Funkkommunikationsgeräten überträgt eine erste Mehrzahl von zwei OFDM-Symbolen in einer ersten Mehrzahl von zwei Frequenzteilbereichen eines Frequenzbereichs, der zum Senden gemäß einem Frequenzsprungmuster ausgewählt ist, wobei der Frequenzbereich eine Mehrzahl von Frequenzteilbereichen umfasst, wobei in der gleichen Sendezeitspanne eine zweite Ad-hoc-Funkkommunikationsvorrichtung der Gruppe von Ad-hoc-Funkkommunikationsvorrichtungen eine zweite Mehrzahl von zwei OFDM-Symbolen in einer zweiten Mehrzahl von zwei Frequenzteilbereichen des Frequenzbereichs überträgt, wobei die zweite Mehrzahl von Frequenzteilbereichen und die erste Mehrzahl von Frequenzteilbereichen nicht überlappen.

In der Veröffentlichung [SAMSUNG: "Time-frequency hopping design for Mode 2 ressource allocation", 3GPP DRAFT; R1-143085, 17. August 2014, XP050788564] wird ein Design von Zeit-/Frequenzsprungmustern für eine D2D Kommunikation (D2D = Device-to-Device, dt. Gerät zu Gerät) in LTE (LTE = Long Term Evolution) beschrieben.

In der Veröffentlichung [ALEX W LAM ET AL: "Time-Hopping and Frequency-Hopping Multiple-Access Packet Communications", 1. Juni 1990, XP002671768] wird ein Zeitsprung- und Frequenzsprung-Mehrfachzugriffs-Paketkommunikationssystem (TH/FHMA) beschrieben. In TH/FHMA-Kommunikationssystemen wird ein Nachrichtenpaket über einen Reed-Solomon-Fehlerkorrekturcode in mehrere Teilpakete codiert. Die Unterpakete werden unter Verwendung von Zeitsprung- und Frequenzsprungmustern über den Kanal übertragen. Dabei wird angenommen, dass der Kanal rauschfrei ist und die Nebeninformationen perfekt sind, so dass alle Kollisionen von Teilpaketen korrekt erkannt werden können.

Die US 6,130,885 A bezieht sich auf ein frequenzsprungbasiertes Kommunikationssystem, welches gleichzeitig unterschiedliche Daten übertragen kann. Zum einen Daten fester Länge unter Verwendung eines Kommunikationsrahmens fester Länge. Zum anderen Daten variabler Länge unter Verwendung eines Kommunikationsrahmens variabler Länge. Die US 2016/044729 A1 bezieht sich auf die Generierung von Übertragungsmustern für eine D2D Kommunikation, wie z.B. Voice OverIP (VoIP). Bei VolP wird vom Codec alle 20ms ein VolP Datenpaket generiert, welches innerhalb der 20ms insgesamt 5x unter Verwendung von Sprungmustern ausgesendet wird. Die sendende WTRU ("wireless transmit receive unit") signalisiert hierbei in einer sog. Scheduling Periode mittels eines SA ("scheduling assignment") einer empfangenen WTRU die Parameter der Sprungmuster, so dass die empfangene WTRU die entsprechenden VolP Datenpakete empfangen kann.

Die US 2003/140298 A1 bezieht sich auf ein Datenkommunikationsprotokoll für die Übertragung langer Nachrichten über eine Frequenzsprung-Kommunikationsverbindung mit mehreren Störern. Nachrichten mit langer Länge werden in mehrere Unterpakete unterteilt, von denen jedes einen Fehlererkennungsmechanismus enthält. Ein Nachrichtenintegritätsfeld wird basierend auf dem Inhalt der Unterpakete berechnet und in einem der mehreren Unterpakete gespeichert. Die Unterpakete werden zwei oder mehrmals übertragen. Jedes Unterpaket wird von einem Empfänger gespeichert, wenn es fehlerfrei empfangen wurde, und der Empfänger berechnet ein Nachrichtenintegritätsfeld auf der Grundlage der gespeicherten Unterpakete. Wenn das berechnete Nachrichtenintegritätsfeld dem in den Unterpaketen empfangenen Nachrichtenintegritätsfeld entspricht, wird die lange Nachricht als ordnungsgemäß übertragen betrachtet.

Der vorliegenden Erfindung liegt somit die Aufgabe zugrunde, ein Konzept zu schaffen, weiches eine für den Empfang der Daten erforderliche Rechenleistung reduziert und/oder einen Overhead bei der Übertragung Daten variabler Länge reduziert,

Diese Aufgabe wird durch die unabhängigen Patentansprüche gelöst.

Vorteilhafte Weiterbildungen finden sich in den abhängigen Patentansprüchen.

Ausführungsbeispiele schaffen einen Datensender, der ausgebildet ist, um Daten unter Verwendung von zumindest zwei Zeitsprungmustern und/oder Frequenzsprungmustern auszusenden, wobei ein zweites Muster der zumindest zwei Muster eine in der Zeit und/oder in der Frequenz verschobene Version eines ersten Musters der zumindest zwei Muster ist.

Ausführungsbeispiele schaffen einen Datenempfänger, der ausgebildet ist, um Daten unter Verwendung von zumindest zwei Zeitsprungmustern und/oder Frequenzsprungmustern zu empfangen, wobei ein zweites Muster der zumindest zwei Muster eine in der Zeit und/oder in der Frequenz verschobene Version eines ersten Musters der zumindest zwei Muster ist.

Bei Ausführungsbeispielen werden zur Übertragung der Daten zwei gleiche Zeitsprungmuster und/oder Frequenzsprungmuster verwendet, die in der Zeit und/oder Frequenz relativ zueinander verschoben sind, so dass sich die mit den zwei Zeitsprungmustern und/oder Frequenzsprungmustern ausgesendeten Daten nicht gegenseitig überlagern.

Ausführungsbeispiele schaffen einen Datensender, der ausgebildet ist, um Daten variabler Länge unter Verwendung eines ersten Zeitsprungmusters und/oder Frequenzsprungmusters und unter Verwendung eines zweiten Zeitsprungmusters und/oder Frequenzsprungmusters auszusenden, wobei das erste Zeitsprungmuster und/oder Frequenzsprungmuster eine feste Länge aufweist, und wobei das zweite Zeitsprungmuster und/oder Frequenzsprungmuster eine variable Länge aufweist.

Ausführungsbeispiele schaffen einen Datenempfänger, der ausgebildet ist, um Daten variabler Länge unter Verwendung eines ersten Zeitsprungmusters und/oder Frequenzsprungmusters und eines zweiten Zeitsprungmusters und/oder Frequenzsprungmusters zu empfangen, wobei das erste Zeitsprungmuster und/oder Frequenzsprungmuster eine feste Länge aufweist, und wobei das zweite Zeitsprungmuster und/oder Frequenzsprungmuster eine variable Länge aufweist.

Bei Ausführungsbeispielen werden zur Übertragung der Daten variabler Länger zwei Zeitsprungmuster und/oder Frequenzsprungmuster verwendet, wobei das erste Zeitsprungmuster und/oder Frequenzsprungmuster eine feste Länge aufweist, und wobei das zweite Zeitsprungmuster und/oder Frequenzsprungmuster eine variable Länge aufweist.

Weitere Ausführungsbeispiele schaffen ein Verfahren zum Senden von Daten. Das Verfahren umfasst einen Schritt des Sendens der Daten unter Verwendung von zwei Zeitsprungmustern oder Frequenzsprungmustern auszusenden, wobei ein zweites Muster der zwei Muster eine in der Zeit oder in der Frequenz verschobene Version eines ersten Musters der zwei Muster ist.

Weitere Ausführungsbeispiele schaffen ein Verfahren zum Empfangen von Daten. Das Verfahren umfasst einen Schritt des Empfangens der Daten unter Verwendung von zwei Zeitsprungmustern oder Frequenzsprungmustern, wobei ein zweites Muster der zwei Muster eine in der Zeit oder in der Frequenz verschobene Version eines ersten Musters der zwei Muster ist.

Weitere Ausführungsbeispiele schaffen ein Verfahren zum Senden von Daten. Das Verfahren umfasst einen Schritt des Sendens der Daten variabler Länge unter Verwendung eines ersten Zeit-/Frequenzsprungmusters und eines zweiten Zeit-/Frequenzsprungmusters, wobei das erste Zeit-/Frequenzsprungmuster eine feste Länge aufweist, und wobei das zweite Zeit-/Frequenzsprungmuster eine variable Länge aufweist.

Weitere Ausführungsbeispiele schaffen ein Verfahren zum Empfangen von Daten. Das Verfahren umfasst einen Schritt des Empfangens der Daten variabler Länge unter Verwendung eines ersten Zeit-/Frequenzsprungmusters und eines zweiten Zeit-/Frequenzsprungmusters, wobei das erste Zeit-/Frequenzsprungmuster eine feste Länge aufweist, und wobei das zweite Zeit-/Frequenzsprungmuster eine variable Länge aufweist.

Weitere Ausführungsbeispiele schaffen ein Übertragungsverfahren zur drahtlosen Übertragung von Daten in einem Kommunikationssystem (z.B. einem Sensornetzwerk oder Telemetriesystem). Das Verfahren umfasst einen Schritt des Übertragens der Daten unter Verwendung von zumindest zwei Zeitsprungmustern und/oder Frequenzsprungmustern, wobei ein zweites Muster der zumindest zwei Muster eine in der Zeit und/oder in der Frequenz verschobene Version eines ersten Musters der zumindest zwei Muster ist.

Weitere Ausführungsbeispiele schaffen ein Übertragungsverfahren zur drahtlosen Übertragung von Daten in einem Kommunikationssystem (z.B. einem Sensornetzwerk oder Telemetriesystem). Das Verfahren umfasst einen Schritt des Übertragens der Daten unter Verwendung eines ersten Zeitsprungmusters und/oder Frequenzsprungmusters und eines zweiten Zeitsprungmusters und/oder. Frequenzsprungmusters, wobei das erste Zeitsprungmuster und/oder Frequenzsprungmuster eine feste Länge aufweist, und wobei das zweite Zeitsprungmuster und/oder Frequenzsprungmuster eine variable Länge aufweist.

Im Folgenden werden bevorzugte Ausführungsbeispiele des Datensenders, der ausgebildet ist, um Daten unter Verwendung von zumindest zwei Zeitsprungmustern und/oder Frequenzsprungmustern auszusenden, wobei ein zweites Muster der zumindest zwei Muster eine in der Zeit und/oder in der Frequenz verschobene Version eines ersten Musters der zumindest zwei Muster ist, beschrieben.

Bei Ausführungsbeispielen kann das Frequenzsprungmuster eine Abfolge von Sendefrequenzen oder Sendefrequenzsprüngen angeben, mit denen die Daten zu senden sind.

Beispielsweise kann ein erster Teil der Daten mit einer ersten Sendefrequenz (oder in einem ersten Frequenzkanal) und ein zweiter Teil der Daten mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Bei Ausführungsbeispielen kann das Zeitsprungmuster eine Abfolge von Sendezeitpunkten oder Sendezeitabständen angeben, mit denen die Daten zu senden sind.

Beispielsweise kann ein erster Teil der Daten zu einem ersten Sendezeitpunkt (oder in einem ersten Sendezeitschlitz) und ein zweiter Teil der Daten zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben.

Bei Ausführungsbeispielen können die Daten eine Mehrzahl von Datenpaketen umfassen, wobei der Datensender ausgebildet ist, um zumindest zwei Datenpakete der Mehrzahl von Datenpakete unter Verwendung des ersten Musters auszusenden, und um zumindest zwei weitere Datenpakete der Mehrzahl von Datenpaketen unter Verwendung eines zweiten Musters auszusenden.

Beispielsweise können die Mehrzahl von Datenpaketen jeweils einen unterschiedlichen oder sich überlappenden Teil der Daten enthalten, so dass die Daten nicht am Stück, sondern aufgeteilt auf die Datenpakete übertragen werden.

Die Daten können ein Telegramm sein, wobei der Datensender ausgebildet ist, um das Telegramm in die Mehrzahl von Datenpaketen aufzuteilen, wobei jedes der Mehrzahl von Datenpaketen kürzer ist als das Telegramm.

Bei Ausführungsbeispielen kann der Datensender ausgebildet sein, um eine Synchronisationssequenz zur Synchronisation der Daten in einem Datenempfänger über die zwei Muster zu verteilen.

Der Datensender kann ausgebildet sein, um die Synchronisationssequenz in zumindest zwei Teilsynchronisationssequenzen aufzuteilen, und um zumindest zwei der Mehrzahl von Datenpaketen mit einer der zumindest zwei Teilsynchronisationssequenzen zu versehen.

im Folgenden werden bevorzugte Ausführungsbeispiele des Datenempfängers beschrieben, der ausgebildet ist, um Daten unter Verwendung von zumindest zwei Zeitsprungmustern und/oder Frequenzsprungmustern zu empfangen, wobei ein zweites Muster der zumindest zwei Muster eine in der Zeit und/oder in der Frequenz verschobene Version eines ersten Musters der zumindest zwei Muster ist.

Bei Ausführungsbeispielen kann das Frequenzsprungmuster eine Abfolge von Empfangsfrequenzen oder Empfangsfrequenzsprüngen angeben, mit denen die Daten zu empfangen sind.

Beispielsweise kann ein erster Teil der Daten mit einer ersten Empfangsfrequenz (oder in einem ersten Frequenzkanal) und ein zweiter Teil der Daten mit einer zweiten Empfangsfrequenz (oder in einem zweiten Frequenzkanal) empfangen werden, wobei die erste Empfangsfrequenz und die zweite Empfangsfrequenz unterschiedlich sind. Das Frequenzsprungmuster kann dabei die erste Empfangsfrequenz und die zweite Empfangsfrequenz definieren (oder vorgeben, oder angeben). Alternativ kann das Frequenzsprungmuster die erste Empfangsfrequenz und einen Frequenzabstand (Empfangsfrequenzsprung) zwischen der ersten Empfangsfrequenz und der zweiten Empfangsfrequenz angeben. Natürlich kann das Frequenzsprungmuster auch nur den Frequenzabstand (Empfangsfrequenzsprung) zwischen der ersten Empfangsfrequenz und der zweiten Empfangsfrequenz angeben.

Bei Ausführungsbeispielen kann das Zeitsprungmuster eine Abfolge von Empfangszeitpunkten oder Empfangszeitäbständen angeben, mit denen die Daten zu empfangen sind.

Beispielsweise kann ein erster Teil der Daten zu einem ersten Empfangszeitpunkt (oder in einem ersten Empfangszeitschlitz) und ein zweiter Teil der Daten zu einem zweiten Empfangszeitpunkt (oder in einem zweiten Empfangszeitschlitz) empfangen werden, wobei der erste Empfangszeitpunkt und der zweite Empfangszeitpunkt unterschiedlich sind. Das Zeitsprungmuster kann dabei den ersten Empfangszeitpunkt und den zweiten Empfangszeitpunkt definieren (oder vorgeben, oder angeben). Alternativ kann das Zeitsprungmuster den ersten Empfangszeitpunkt und einen zeitlichen Abstand zwischen dem ersten Empfangszeitpunkt und dem zweiten Empfangszeitpunkt angeben. Natürlich kann das Zeitsprungmuster auch nur den zeitlichen Abstand zwischen dem ersten Empfangszeitpunkt und dem zweiten Empfangszeitpunkt angeben.

Bei Ausführungsbeispielen können die Daten eine Mehrzahl von Datenpaketen umfassen, wobei der Datenempfänger ausgebildet sein kann, um die zumindest zwei Datenpakete entsprechend des ersten Musters zu empfangen, und um die zumindest zwei weiteren Datenpakete entsprechend des zweiten Musters zu empfangen.

Die Daten können ein Telegramm sein, das in die Mehrzahl von Datenpaketen aufgeteilt ist, wobei jedes der Mehrzahl von Datenpaketen kürzer ist als das Telegramm. Der Datenempfänger kann dabei ausgebildet sein, um die Mehrzahl von Datenpaketen zu kombinieren, um das Telegramm zu erhalten.

Bei Ausführungsbeispielen kann der Datenempfänger ausgebildet sein, um eine erste Synchronisation für das erste Muster durchzuführen, um ein erstes Synchronisationsergebnis zu erhalten, und um eine zweite Synchronisation für das zweite Muster durchzuführen, um ein zweites Synchronisationsergebnis zu erhalten. Der Datenempfänger kann dabei ausgebildet sein, um das erste Synchronisationsergebnis und das zweite Synchronisationsergebnis zu kombinieren, um ein Gesamtsynchronisationsergebnis zu erhalten,

Ferner kann der Datenempfänger ausgebildet sein, um eine erste Synchronisation für das erste Muster durchzuführen, um ein erstes Synchronisationsergebnis zu erhalten, und um eine zweite Synchronisation für das zweite Muster unter Verwendung des ersten Synchronisationsergebnisses durchzuführen, um ein Gesamtsynchronisationsergebnis zu erhalten.

Dabei kann der Datenempfänger ausgebildet sein, um ein weiteres Synchronisationsergebnis für die zweite Synchronisation zu erhalten, unter Verwendung des ersten Synchronisationsergebnisses, um ein weiteres Gesamtsynchronisationsergebnis zu erhalten.

Ferner kann der Datenempfänger dabei ausgebildet sein, um ein zweites Synchronisationsergebnis für die zweite Synchronisation zu erhalten, und um das erste Synchronisationsergebnis der ersten Synchronisation und das zweite Synchronisationsergebnis der zweiten Synchronisation zu kombinieren, um ein Gesamtsynchronisationsergebnis zu erhalten.

Bei Ausführungsbeispielen kann eine Synchronisationssequenz zur Synchronisation der Daten über die zumindest zwei Muster verteilt sein, wobei der Datenempfänger ausgebildet sein kann, um eine Synchronisation unter Verwendung der Synchronisationssequenz durchzuführen, um die Daten in einem Empfangsdatenstrom zu detektieren,

Beispielsweise können zumindest zwei der Mehrzahl von Datenpaketen jeweils mit einer Teilsynchronisationssequenz von zumindest zwei Teilsynchronisationssequenzen, in die die Synchronisationssequenz aufgeteilt ist, versehen sein, wobei der Datenempfänger ausgebildet sein kann, um eine Synchronisation unter Verwendung der Teilsynchronisationssequenzen durchzuführen, um die Daten in einem Empfangsdatenstrom zu detektieren.

Im Folgenden werden bevorzugte Ausführungsbeispiele des Datensenders beschrieben, der ausgebildet ist, um Daten variabler Länge unter Verwendung eines ersten Zeitsprungmusters und/oder Frequenzsprungmusters und unter Verwendung eines zweiten Zeitsprungmusters und/oder Frequenzsprungmusters auszusenden, wobei das erste Zeitsprungmuster und/oder Frequenzsprungmuster eine feste Länge aufweist, und wobei das zweite Zeitsprungmuster und/oder Frequenzsprungmuster eine variable Länge aufweist.

Bei Ausführungsbeispielen kann das Frequenzsprungmuster eine Abfolge von Sendefrequenzen oder Sendefrequenzsprüngen angeben, mit denen die Daten zu senden sind.

Beispielsweise kann ein erster Teil der Daten mit einer ersten Sendefrequenz (oder in einem ersten Frequenzkanal) und ein zweiter Teil der Daten mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Bei Ausführungsbeispielen kann das Zeitsprungmuster eine Abfolge von Sendezeitpunkten oder Sendezeitabständen angeben, mit denen die Daten zu senden sind.

Beispielsweise kann ein erster Teil der Daten zu einem ersten Sendezeitpunkt (oder in einem ersten Sendezeitschlitz) und ein zweiter Teil der Daten zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben.

Bei Ausführungsbeispielen können die Daten eine Mehrzahl von Datenpaketen umfassen, wobei das erste Zeitsprungmuster und/oder Frequenzsprungmuster eine feste Anzahl der Mehrzahl von Datenpaketen aufweist, und wobei das zweite Zeitsprungmuster und/oder Frequenzsprungmuster eine variable Anzahl der Mehrzahl von Datenpaketen aufweist.

Beispielsweise können die Daten variabler Länge in die Mehrzahl von Datenpaketen unterteilt sein, so dass jedes Datenpaket der Mehrzahl von Datenpaketen einen Teil der Daten variabler Länge aufweist.

Die Daten variabler Länge können einen Datenanteil fester Länge und einen Datenanteil variabler Länge umfassen. Der Datensender kann dabei ausgebildet sein, um den Datenanteil fester Länge mit dem ersten Zeitsprungmuster und/oder Frequenzsprungmuster und den Datenanteil variabler Länge mit dem zweiten Zeitsprungmuster und/oder Frequenzsprungmuster auszusenden.

Die Daten können ein Telegramm sein, wobei der Datensender ausgebildet ist, um das Telegramm in die Mehrzahl von Datenpaketen aufzuteilen, wobei jedes der Mehrzahl von Datenpakete kürzer ist als das Telegramm.

Bei Ausführungsbeispielen kann sich das erste Zeitsprungmuster und/oder Frequenzsprungmuster und das zweite Zeitsprungmuster und/oder Frequenzsprungmuster auch im Falle gleicher Länge voneinander unterscheiden.

Bei Ausführungsbeispielen kann ein Abschnitt des zweiten Zeitsprungmusters und/oder Frequenzsprungmusters identisch zu einem entsprechenden Abschnitt des ersten Zeitsprungmusters und/oder Frequenzsprungmusters sein. Dabei können beide Abschnitte die Länge des kürzeren aus dem ersten Zeitsprungmuster und/oder Frequenzsprungmuster und dem zweiten Zeitsprungmuster und/oder Frequenzsprungmuster aufweisen.

Beispielsweise kann für das erste Zeitsprungmuster und/oder Frequenzsprungmuster und das zweite Zeitsprungmuster und/oder Frequenzsprungmuster das gleiche Muster verwendet werden, wobei bei der Übertragung der Daten variabler Länge mit dem zweiten Zeitsprungmuster und/oder Frequenzsprungmuster die Übertragung einfach beendet wird, sobald die Daten variabler Länger (vollständig) übertragen wurden, d.h. es werden keine Dummy-Daten angehängt, um das Muster vollständig zu übertragen, oder aber das Muster wird erneut verwendet bzw. wiederholt, wenn noch nicht alle Daten variabler Länger (vollständig) übertragen wurden.

Bei Ausführungsbeispielen kann der Datensender ausgebildet sein, um die in dem ersten Zeitsprungmuster und/oder Frequenzsprungmuster enthaltenen Daten mit einer Information über die Länge des zweiten Zeitsprungmusters und/oder Frequenzsprungmusters zu versehen, um die Länge des zweiten Zeitsprungmusters und/oder Frequenzsprungmusters zu signalisieren.

Beispielsweise kann der Datensender ausgebildet sein, um einen Teil der in dem ersten Zeitsprungmuster und/oder Frequenzsprungmuster enthaltenen Daten zur Signalisierung der Länge des zweiten Zeitsprungmusters und/oder Frequenzsprungmusters zu verwenden.

Bei Ausführungsbeispielen kann der Datensender ausgebildet sein, um den Daten eine Information über die Länge des zweiten Zeitsprungmusters und/oder Frequenzsprungmusters, so dass ein Teil der in dem ersten Zeitsprungmuster und/oder Frequenzsprungmuster enthaltenen Daten zur Signalisierung der Länge des zweiten Zeitsprungmusters und/oder Frequenzsprungmusters verwendet werden kann.

Bei Ausführungsbeispielen kann der Datensender ausgebildet sein, um das zweite Zeitsprungmuster und/oder Frequenzsprungmuster basierend auf (einem Teil) der in dem ersten Zeitsprungmuster und/oder Frequenzsprungmuster enthaltenen Daten zu generieren.

Beispielsweise können die Daten Fehlerschutzdaten aufweisen, wobei der Datensender ausgebildet sein kann, um das zweite Zeitsprungmuster und/oder Frequenzsprungmuster basierend auf den Fehlerschutzdaten oder einen Teil der Fehlerschutzdaten zu generieren.

Ferner kann der Datensender kann ausgebildet sein, um das zweite Zeitsprungmuster und/oder Frequenzsprungmuster basierend auf dem Teil der Daten, der zur Signalisierung der Länge des zweiten Zeitsprungmusters und/oder Frequenzsprungmusters verwendet wird, zu generieren.

Bei Ausführungsbeispielen kann der Datensender ausgebildet sein, um eine Synchronisationssequenz für das zweite Zeitsprungmuster und/oder Frequenzsprungmuster basierend auf einem Teil der in dem ersten Zeitsprungmuster und/oder Frequenzsprungmuster enthaltenen Daten zu generieren.

Beispielsweise kann der Datensender ausgebildet sein, um die Synchronisationssequenz für das zweite Zeitsprungmuster und/oder Frequenzsprungmuster basierend auf dem Teil der Daten, der zur Signalisierung der Länge des zweiten Zeitsprungmusters und/oder Frequenzsprungmusters verwendet wird, zu generieren.

Bei Ausführungsbeispielen kann der Datensender ausgebildet sein, um das erste Zeitsprungmuster und/oder Frequenzsprungmuster und das zweite Zeitsprungmuster und/oder Frequenzsprungmuster mit unterschiedlichen Synchronisationssequenzen zu versehen.

Der Datensender kann ausgebildet sein, um das erste Zeitsprungmuster und/oder Frequenzsprungmuster und das zweite Zeitsprungmuster und/oder Frequenzsprungmuster mit unterschiedlich langen Synchronisationssequenzen zu versehen.

Der Datensender kann ausgebildet sein, um die in dem ersten Zeitsprungmuster und/oder Frequenzsprungmuster enthaltenen Daten mit einer anderen Datenrate zu übertragen als die in dem zweiten Zeitsprungmuster und/oder Frequenzsprungmuster enthaltenen Daten.

Der Datensender kann ausgebildet sein, um die Datenrate mit der das zweite Zeitsprungmuster und/oder Frequenzsprungmuster übertragen wird basierend auf dem Teil der Daten zu generieren.

Beispielsweise kann der Datensender ausgebildet sein, um die Datenrate mit der das zweite Zeitsprungmuster und/oder Frequenzsprungmuster übertragen wird basierend auf dem Teil der Daten, der zur Signalisierung der Länge des zweiten Zeitsprungmusters und/oder Frequenzsprungmusters verwendet wird, zu generieren.

Bei Ausführungsbeispielen kann der Datensender ausgebildet sein, um die in dem ersten Zeitsprungmuster und/oder Frequenzsprungmuster enthaltenen Daten mit einem anderen Übertragungsverfahren zu übertragen als die in dem Zeitsprungmuster und/oder Frequenzsprungmuster enthaltenen Daten.

Beispielsweise kann der Datensender ausgebildet sein, um das Übertragungsverfahren mit der das zweite Zeitsprungmuster und/oder Frequenzsprungmuster übertragen wird basierend auf einem Teil der Daten zu generieren.

Ferner kann der Datensender ausgebildet sein, um das Übertragungsverfahren mit der das zweite Zeitsprungmuster und/oder Frequenzsprungmuster übertragen wird basierend auf dem Teil der Daten, der zur Signalisierung der Länge des zweiten Zeitsprungmusters und/oder Frequenzsprungmusters verwendet wird, zu generieren.

Bei Ausführungsbeispielen kann der Datensender ausgebildet sein, um als erstes Zeitsprungmuster und/oder Frequenzsprungmuster zwei Zeitsprungsubmuster und/oder Frequenzsubsprungmuster zu verwenden, wobei ein zweites Zeitsprungsubmuster und/oder Frequenzsprungsubmuster der zwei Zeitsprungsubmuster und/oder Frequenzsprungsubmuster eine in der Zeit oder in der Frequenz verschobene Version eines ersten Zeitsprungsubmuster und/oder Frequenzsprungsubmuster der zwei Zeitsprungsubmuster und/oder Frequenzsprungsubmuster ist.

Ferner kann der Datensender ausgebildet sein, um als zweites Zeitsprungmuster und/oder Frequenzsprungmuster zwei Zeitsprungsubmuster und/oder Frequenzsubsprungmuster zu verwenden, wobei ein zweites Zeitsprungsubmuster und/oder Frequenzsprungsubmuster der zwei Zeitsprungsubmuster und/oder Frequenzsprungsubmuster eine in der Zeit oder in der Frequenz verschobene Version eines ersten Zeitsprungsubmuster und/oder Frequenzsprungsubmuster der zwei Zeitsprungsubmuster und/oder Frequenzsprungsubmuster ist.

Beispielsweise kann der Datensender ausgebildet sein, um die zwei Zeitsprungsubmuster und/oder Frequenzsprungsubmuster mit unterschiedlichen Synchronisationssequenzen zu versehen.

Im Folgenden werden detaillierte Ausführungsbeispiele des Datenempfängers beschrieben, der ausgebildet ist, um Daten variabler Länge unter Verwendung eines ersten Zeitsprungmusters und/oder Frequenzsprungmusters und eines zweiten Zeitsprungmusters und/oder Frequenzsprungmusters zu empfangen, wobei das erste Zeitsprungmuster und/oder Frequenzsprungmuster eine feste Länge aufweist, und wobei das zweite Zeitsprungmuster und/oder Frequenzsprungmuster eine variable Länge aufweist.

Bei Ausführungsbeispielen kann das Frequenzsprungmuster eine Abfolge von Empfangsfrequenzen oder Empfangsfrequenzsprüngen angeben, mit denen die Daten zu empfangen sind.

Beispielsweise kann ein erster Teil der Daten mit einer ersten Empfangsfrequenz (oder in einem ersten Frequenzkanal) und ein zweiter Teil der Daten mit einer zweiten Empfangsfrequenz (oder in einem zweiten Frequenzkanal) empfangen werden, wobei die erste Empfangsfrequenz und die zweite Empfangsfrequenz unterschiedlich sind. Das Frequenzsprungmuster kann dabei die erste Empfangsfrequenz und die zweite Empfangsfrequenz definieren (oder vorgeben, oder angeben). Alternativ kann das Frequenzsprungmuster die erste Empfangsfrequenz und einen Frequenzabstand (Empfangsfrequenzsprung) zwischen der ersten Empfangsfrequenz und der zweiten Empfangsfrequenz angeben. Natürlich kann das Frequenzsprungmuster auch nur den Frequenzabstand (Empfangsfrequenzsprung) zwischen der ersten Empfangsfrequenz und der zweiten Empfangsfrequenz angeben.

Bei Ausführungsbeispielen kann das Zeitsprungmuster eine Abfolge von Empfangszeitpunkten oder Empfangszeitabständen angeben, mit denen die Daten zu empfangen sind.

Beispielsweise kann ein erster Teil der Daten zu einem ersten Empfangszeitpunkt (oder in einem ersten Empfangszeitschlitz) und ein zweiter Teil der Daten zu einem zweiten Empfangszeitpunkt (oder in einem zweiten Empfangszeitschlitz) empfangen werden, wobei der erste Empfangszeitpunkt und der zweite Empfangszeitpunkt unterschiedlich sind. Das Zeitsprungmuster kann dabei den ersten Empfangszeitpunkt und den zweiten Empfangszeitpunkt definieren (oder vorgeben, oder angeben). Alternativ kann das Zeitsprungmuster den ersten Empfangszeitpunkt und einen zeitlichen Abstand zwischen dem ersten Empfangszeitpunkt und dem zweiten Empfangszeitpunkt angeben. Natürlich kann das Zeitsprungmuster auch nur den zeitlichen Abstand zwischen dem ersten Empfangszeitpunkt und dem zweiten Empfangszeitpunkt angeben.

Bei Ausführungsbeispielen kann der Datenempfänger ausgebildet sein, um eine Länge des zweiten Zeitsprungmusters und/oder Frequenzsprungmusters aus den in dem ersten Zeitsprungmuster und/oder Frequenzsprungmuster enthaltenen Daten zu ermitteln.

Bei Ausführungsbeispielen können die Daten eine Mehrzahl von Datenpaketen umfassen, wobei das erste Zeitsprungmuster und/öder Frequenzsprungmuster eine feste Anzahl der Mehrzahl von Datenpaketen aufweist, und wobei das zweite Zeitsprungmuster und/oder Frequenzsprungmuster eine variable Anzahl der Mehrzahl von Datenpaketen aufweist. Beispielsweise können die Daten variabler Länge in die Mehrzahl von Datenpaketen unterteilt sein, so dass jedes Datenpaket der Mehrzahl von Datenpaketen einen Teil der Daten variabler Länge aufweist.

Die Daten variabler Länge können einen Datenanteil fester Länge und einen Datenanteil variabler Länge umfassen. Der Datensender kann dabei ausgebildet sein, um den Datenanteil fester Länge mit dem ersten Zeitsprungmuster und/oder Frequenzsprungmuster und den Datenanteil variabler Länge mit dem zweiten Zeitsprungmuster und/oder Frequenzsprungmuster auszusenden.

Die Daten können ein Telegramm sein, das in die Mehrzahl von Datenpaketen aufgeteilt ist, wobei jedes der Mehrzahl von Datenpakete kürzer ist als das Telegramm. Der Datenempfänger kann dabei ausgebildet sein, um die Mehrzahl von Datenpaketen zu kombinieren, um das Telegramm zu erhalten.

Bei Ausführungsbeispielen können die in dem ersten Zeitsprungmuster und/oder Frequenzsprungmuster enthaltenen Daten mit einer Information über die Länge des zweiten Zeitsprungmusters und/oder Frequenzsprungmusters versehen sein. Der Datenempfänger kann dabei ausgebildet sein, um die Information über die Länge des zweiten Zeitsprungmusters und/oder Frequenzsprungmusters aus den Daten zu extrahieren.

Beispielsweise kann ein Teil der in dem ersten Zeitsprungmuster und/oder Frequenzsprungmuster enthaltenen Daten zur Signalisierung der Länge des zweiten Zeitsprungmusters und/oder Frequenzsprungmusters verwendet werden. Der Datenempfänger kann dabei ausgebildet sein, um die Länge des zweiten Zeitsprungmusters und/oder Frequenzsprungmusters aus dem Teil der in dem ersten Zeitsprungmuster und/oder Frequenzsprungmuster enthaltenen Daten zu ermitteln.

Bei Ausführungsbeispielen kann der Datenempfänger ausgebildet sein, um das zweite Zeitsprungmuster und/oder Frequenzsprungmuster basierend auf einem Teil der in dem ersten Zeitsprungmuster und/oder Frequenzsprungmuster enthaltenen Daten zu generieren.

Beispielsweise kann der Datenempfänger ausgebildet sein, um das zweite Zeitsprungmuster und/oder Frequenzsprungmuster basierend auf Fehlerschutzdaten oder einen Teil der Fehlerschutzdaten, die in dem ersten Zeitsprungmuster und/oder Frequenzsprungmuster enthaltenen Daten enthalten sind, zu generieren.

Der Datenempfänger kann ferner ausgebildet sein, um das zweite Zeitsprungmuster und/oder Frequenzsprungmuster basierend dem Teil der Daten, der zur Signalisierung der Länge des zweiten Zeitsprungmusters und/oder Frequenzsprungmusters verwendet wird, zu generieren.

Bei Ausführungsbeispielen kann der Datenempfänger ausgebildet sein, um eine Referenzsynchronisationssequenz basierend auf einem Teil der in dem ersten Zeitsprungmuster und/oder Frequenzsprungmuster enthaltenen Daten zu generieren. Der Datenempfänger kann dabei ausgebildet sein, um die unter Verwendung des zweiten Zeitsprungmusters und/oder Frequenzsprungmusters zu empfangenen Daten unter Verwendung der Referenzsynchronisationssequenz zu empfangen.

Beispielsweise kann der Datenempfänger ausgebildet sein, um die Referenzsynchronisationssequenz basierend auf dem Teil der Daten, der zur Signalisierung der Länge des zweiten Zeitsprungmusters und/oder Frequenzsprungmusters verwendet wird, zu generieren.

Bei Ausführungsbeispielen kann der Datenempfänger ausgebildet sein, um als erstes Zeitsprungmuster und/oder Frequenzsprungmuster zwei Zeitsprungsubmuster und/oder Frequenzsubsprungmuster zu verwenden, wobei ein zweites Zeitsprungsubmuster und/oder Frequenzsprungsubmuster der zwei Zeitsprungsubmuster und/oder Frequenzsprungsubmuster eine in der Zeit oder in der Frequenz verschobene Version eines ersten Zeitsprungsubmuster und/oder Frequenzsprungsubmuster der zwei Zeitsprungsubmuster und/oder Frequenzsprungsubmuster ist.

Bei Ausführungsbeispielen kann der Datenempfänger ausgebildet sein, um als zweites Zeitsprungmuster und/oder Frequenzsprungmuster zwei Zeitsprungsubmuster und/oder Frequenzsubsprungmuster zu verwenden, wobei ein zweites Zeitsprungsubmuster und/oder Frequenzsprungsubmuster der zwei Zeitsprungsubmuster und/oder Frequenzsprungsubmuster eine in der Zeit oder in der Frequenz verschobene Version eines ersten Zeitsprungsubmuster und/oder Frequenzsprungsubmuster der zwei Zeitsprungsubmuster und/oder Frequenzsprungsubmuster ist.

Ausführungsbeispiele der vorliegenden Erfindung werden bezugnehmend auf die beiliegenden Figuren näher erläutert. Es zeigen:
- Fig. 1: ein schematisches Blockschaltbild eines Systems mit einem Datensender und einem Datenempfänger, gemäß einem Ausführungsbeispiel der vorliegenden Erfindung;
- Fig. 2: in einem Diagramm eine Belegung eines Übertragungskanals bei der Übertragung einer Mehrzahl von Datenpaketen unter Verwendung einer Mehrzahl von Zeit- und Frequenzsprungmustern;
- Fig. 3: ein schematisches Blockschaltbild eines Systems mit einem Datensender und einem Datenempfänger, gemäß einem weiteren Ausführungsbeispiel der vorliegenden Erfindung;
- Fig. 4: in einem Diagramm eine Belegung eines Übertragungskanals bei der Übertagung einer Mehrzahl von Datenpaketen unter Verwendung eines ersten Zeit- und Frequenzsprungmusters und eines zweites Zeit- und Frequenzsprungmusters;
- Fig. 5: ein Flussdiagramm eines Verfahrens zum Senden von Daten, gemäß einem Ausführungsbeispiel;
- Fig. 6: ein Flussdiagramm eines Verfahrens zum Empfangen von Daten, gemäß einem Ausführungsbeispiel;
- Fig. 7: ein Flussdiagramm eines Verfahrens zum Senden von Daten, gemäß einem weiteren Ausführungsbeispiel; und
- Fig. 8: ein Flussdiagramm eines Verfahrens zum Empfangen von Daten, gemäß einem weiteren Ausführungsbeispiel.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibungen in den unterschiedlichen Ausführungsbeispielen untereinander austauschbar ist.

### Clusterbildung

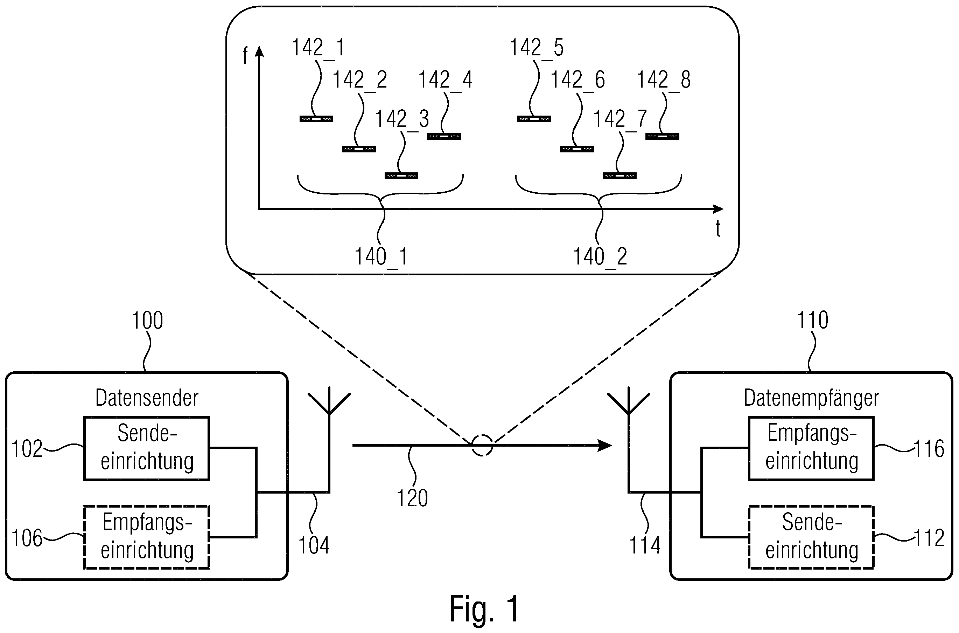

Fig. 1 zeigt ein schematisches Blockschaltbild eines Systems mit einem Datensender 100 und einem Datenempfänger 110, gemäß einem Ausführungsbeispiel der vorliegenden Erfindung.

Der Datensender 100 ist ausgebildet, um Daten 120 unter Verwendung von zumindest zwei Zeitsprungmustern und/oder Frequenzsprungmustern 140_1 und 140_2 auszusenden, wobei ein zweites Muster 140_2 der zumindest zwei Muster 140_1 und 140_2 eine in der Zeit und/oder in der Frequenz verschobene Version eines ersten Musters 140_1 der zumindest zwei Muster 140_1 und 140_2 ist.

Der Datenempfänger 110 ist ausgebildet, um die Daten 120 unter Verwendung von zumindest zwei Zeitsprungmustern und/oder Frequenzsprungmustern 140_1 und 140_2 zu empfangen, wobei ein zweites Muster 140_2 der zumindest zwei Muster 140_1 und 140_2 eine in der Zeit und/oder in der Frequenz verschobene Version eines ersten Musters 140_1 der zumindest zwei Muster 140_1 und 140_2 ist.

In Fig. 1 wird beispielshaft davon ausgegangen, dass die Daten unter Verwendung von zumindest zwei Frequenz- und Zeitsprungmustern (d.h. kombinierten Frequenzsprungmustern und Zeitsprungmustern) 140_1 und 140_2 übertragen werden. Natürlich können die Daten 120 auch nur unter Verwendung von reinen Frequenzsprungmustern oder Zeitsprungmustern übertragen werden.

Ein Frequenzsprungmuster kann eine Abfolge von Sendefrequenzen oder Sendefrequenzsprüngen sein mit denen der Datensender 100 die Daten sendet.

Beispielsweise kann ein erster Teil der Daten mit einer ersten Sendefrequenz (oder in einem ersten Frequenzkanal) und ein zweiter Teil der Daten mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Ein Zeitsprungmuster kann eine Abfolge von Sendezeitpunkten oder Sendezeitabständen sein mit denen der Datensender 100 die Daten sendet.

Beispielsweise kann ein erster Teil der Daten zu einem ersten Sendezeitpunkt (oder in einem ersten Sendezeitschlitz) und ein zweiter Teil der Daten zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben.

Wie in Fig. 1 zu erkennen ist, kann das zweite Muster 140_2 eine in der Zeit verschobene Version des ersten Musters 140_1 sein. Alternativ kann das zweite Muster 140_2 auch eine in der Frequenz verschobene Version des ersten Musters 140_1 sein. Natürlich kann das zweite Muster 140_2 auch eine in der Zeit und der Frequenz verschobene Version des ersten Musters 140_1 sein.

Bei Ausführungsbeispielen können die Daten 120 eine Mehrzahl von Datenpaketen 142_1 bis 142_n umfassen, die entsprechend bzw. unter Verwendung der zumindest zwei Frequenzsprungmuster und/oder Zeitsprungmuster 140_1 und 140_2 von dem Datensender 100 zu dem Datenempfänger 110 übertragen werden.

In Fig. 1 umfassen die Daten 120 beispielhaft n = 8 Datenpakete 142_1 bis 142_n, die unter Verwendung von m = 2 Zeitsprungmustern und/oder Frequenzsprungmustern 140_1 bis 140_m übertragen werden. Bei Ausführungsbeispielen kann eine Anzahl n der Datenpakete ein ganzzahliges Vielfaches einer Anzahl m von Zeitsprungmustern und/oder Frequenzsprungmustern sein, so dass die Datenpakete gleichmäßig auf die Anzahl m von Zeitsprungmustern und/oder Frequenzsprungmustern aufgeteilt werden können, wobei die Anzahl n der Datenpakete 142_1 bis 142_n zumindest doppelt so groß ist wie die Anzahl m der Zeitsprungmuster und/oder Frequenzsprungmuster 140_1 bis 140_m, so dass in jedem Zeitsprungmuster und/oder Frequenzsprungmuster 140_1 bis 140_m mindestens zwei Datenpakete übertragen werden.

Die Daten können dabei so übertragen werden, dass zwischen den Datenpaketen 142_1 bis 142_n Sendepausen (Pausen in denen der Datensender nicht sendet) vorhanden sind.

Die Daten können ein Telegramm sein, dass in die Mehrzahl von Datenpaketen 142_1 bis 142_m aufgeteilt ist, wobei jedes der Mehrzahl von Datenpakete 142_1 bis 142_m kürzer ist als das Telegramm.

Bei Ausführungsbeispielen kann der Datensender 100 eine Sendeeinrichtung (Transmitter) 102 aufweisen, die ausgebildet ist, um die Daten 120 zu senden. Die Sendeeinrichtung 102 kann mit einer Antenne 104 des Datensenders 100 verbunden sein. Der Datensender 100 kann ferner eine Empfangseinrichtung (Receiver) 106 aufweisen, die ausgebildet ist, um Daten zu empfangen. Die Empfangseinrichtung kann mit der Antenne 104 oder einer weiteren Antenne des Datensenders 100 verbunden sein. Der Datensender 100 kann auch eine kombinierte Sendeempfangseinrichtung (Transceiver) aufweisen.

Der Datenempfänger 110 kann eine Empfangseinrichtung (Receiver) 116 aufweisen, die ausgebildet ist, um die Daten 120 zu empfangen. Die Empfangseinrichtung 116 kann mit einer Antenne 114 oder einer weiteren Antenne des Datenempfängers 110 verbunden sein. Ferner kann der Datenempfänger 110 eine Sendeeinrichtung (Transmitter) 112 aufweisen, die ausgebildet ist, um Daten zu senden. Die Sendeeinrichtung 112 kann mit der Antenne 114 des Datenempfängers 110 verbunden sein. Der Datenempfänger 110 kann auch eine kombinierte Sendeempfangseinrichtung (Transceiver) aufweisen.

Bei Ausführungsbeispielen kann der Datensender 100 ein Sensorknoten sein, während der Datenempfänger 110 eine Basisstation sein kann. Natürlich ist es auch möglich, dass der Datensender 100 eine Basisstation ist, während der Datenempfänger 110 ein Sensorknoten ist. Ferner ist es möglich, dass sowohl der Datensender 100 als auch der Datenempfänger 110 Sensorknoten sind. Des Weiteren ist es möglich, dass sowohl der Datensender 100 als auch der Datenempfänger 110 Basisstationen sind.

Im Folgenden werden detaillierte Ausführungsbeispiele des anhand von Fig. 1 vorgestellten Übertragungsverfahrens, das durch den Datensender 100 und den Datenempfänger 110 durchgeführt werden kann, näher erläutert.

Dabei werden Ausführungsbeispiele beschrieben, die es ermöglichen, eine Übertagungssicherheit in nicht koordinierten Kanälen zu erhöhen, unter Verwendung desselben Kanals für mehrere Teilnehmer. Zusätzlich kann die Übertragung in unlizenzierten Bändern stattfinden, in denen weitere Störungen durch Fremdsysteme hervorgerufen werden.

Ferner werden Ausführungsbeispiele beschrieben, die es ermöglichen die Rechenleistung in der Basisstation unter Verwendung von mehreren Sprungmustern zu reduzieren. Des Weiteren werden Merkmale beschrieben, die die Zahl der möglichen gleichzeitigen Übertragungen zweier Telegramme zu erhöhen, den Kanal bei gleichbleibender Ausfallrate somit stärker auslasten können.

Bisherige Systeme können aufgrund von begrenzter Rechenleistung die Detektion über meist nur ein oder sehr wenige Sprungmuster parallel berechnen. Beginnen nun zwei Sensorknoten zum gleichen Zeitpunkt eine Aussendung ist eine korrekte Dekodierung nur möglich, wenn zwei verschiedene Sprungmuster verwendet wurden. Andernfalls lässt sich in der Regel nur eines oder keines der beiden Pakete korrekt empfangen und dekodieren.

Bisherige Systeme verwenden zwischen allen Hops 142_1 bis 142_n pseudozufällige Sprungmuster für die Zeit und falls vorhanden auch für die Frequenz. Die Detektion der Pakete läuft hierfür im Allgemeinen unter Verwendung folgender Schritte ab.

Ein erster Schritt umfasst eine Rückgewinnung der mutmaßlichen Symbole (mit Zeit- und Frequenzüberabtastung). Ein zweiter Schritt umfasst eine Detektion über Teilsequenzen bzw. Hops. Ein dritter Schritt umfasst eine Detektion über Ergebnisse aller der Teilsequenzen bzw. Hops.

Wird nun anstelle eines verwendeten Sprungmusters ein weiteres eingesetzt, muss der zweite Schritt und der dritte Schritt für beide Sprungmuster parallel berechnet werden, was die notwendige Rechenleistung stark erhöht.

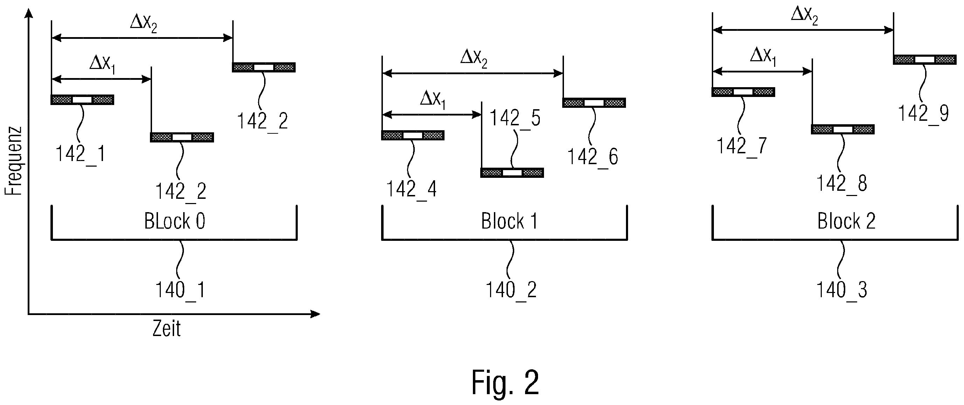

Anstelle zwischen jedem Hop 142_1 bis 142_n eine pseudozufällige Pause und/oder Frequenzsprung zu machen, werden Hops 142_1 bis 142_n oder Teilsequenzen zu Clustern 140_1 bis 140_m zusammengefasst, wobei diese Cluster 140_1 bis 140_m eine Größe von mindestens zwei Hops 142_1 bis 142_n bzw. Teilsequenzen besitzen, wie nachfolgend anhand von Fig. 2 näher erläutert wird. Hierdurch reduziert sich die Größe des pseudozufälligen Sprungmusters um den Faktor der Clusterlänge. Innerhalb des Clusters kann zusätzlich ein Sprungmuster (Zeit und/oder Frequenz) verwendet werden. Dieses muss jedoch in allen Clustern gleich sein,

Fig. 2 zeigt in einem Diagramm eine Belegung eines Übertragungskanals bei der Übertragung einer Mehrzahl von Datenpaketen 142_1 bis 142_n unter Verwendung einer Mehrzahl von Zeit- und Frequenzsprungmustern 140_1 bis 140_m. Dabei beschreibt die Ordinate die Frequenz und die Abszisse die Zeit.

Wie in Fig. 2 beispielhaft zu erkennen ist, können neun Datenpakete 142_1 bis 142_9 in drei Zeit- und Frequenzsprungmuster 140_1 bis 140_3 unterteilt werden, so dass jedes der drei Zeit- und Frequenzsprungmuster 140_1 bis 140_3 drei der Datenpakete 142_1 bis 142_9 umfasst. Das zweite Zeit- und Frequenzsprungmuster 140_2 kann dabei eine in der Zeit und Frequenz verschobene Version des ersten Zeit- und Frequenzsprungmusters 140_1 sein, wobei das dritte Zeit- und Frequenzsprungmuster 140_3 eine in der Zeit und Frequenz verschobene Version des ersten Zeit- und Frequenzsprungmusters 140_1 sein kann. Die Zeitabstände Δx₁ und ΔX₂ und Frequenzabstände zwischen den Datenpaketen ist in den drei Zeit- und Frequenzsprungmustern 140_1 bis 140_3 gleich. Die Datenpakete 142_1 bis 142_9 oder zumindest ein Teil der Datenpakete können mit Synchronisationssequenzen oder Teilsynchronisationssequenzen (aufgeteilte Synchronisationssequenz) zur Synchronisation und/oder Detektion am Datenempfänger versehen sein.

Mit anderen Worten, Fig. 2 zeigt eine Unterteilung von Hops 142_1 bis 142_n zu Clustern 140_1 bis 140_m. Fig. 2 zeigt dieses Verfahren beispielhaft für neun Hops 142_1 bis 142_9 welche zu drei Clustern 140_1 bis 140_3 mit der Größe von drei Hops zusammengefasst wurden. Innerhalb dieser Cluster 140_1 bis 140_3 ist das Sprungmuster für die Zeit- und optional Frequenz gleich. Zwischen den Clustern 140_1 bis 140_3 können die Pausen und Frequenzen unterschiedlich sein.

Die Detektion kann dabei um einen weiteren Schritt in der Berechnung erweitert werden, so dass die Detektion folgende Schritte umfasst.

Ein erster Schritt umfasst Rückgewinnen der mutmaßlichen Symbole (mit Zeit- und Frequenzüberabtastung). Ein zweiter Schritt umfasst Detektieren über Teilsequenzen bzw. Hops. Ein dritter Schritt umfasst Detektieren über Ergebnisse der Teilsequenzen bzw. Hops innerhalb eines Clusters. Ein vierter Schritt umfasst Detektieren über die Ergebnisse der Cluster.

Trotz dieser Erweiterung wird beim Einsatz von mehreren Sprungsequenzen weniger Rechenleistung benötigt. Dies soll die folgende Beispielrechnung für ein Telegramm mit 30 Hops unterteilt in eine Clustergröße von drei Hops und drei Sprungmustern für einen Rechenschritt zeigen.

Bei der klassischen Methode werden pro Sprungmuster 30 Additionen der Korrelationsergebnisse der Hops bzw. Teilsequenzen durchgeführt, d.h. 30 Additionen/Sprungmuster ^{∗} 3 Sprungmuster = 90 Additionen.

Bei der Clustermethode werden die Teilergebnisse zu Cluster addiert, d.h. 3 Hops ^{∗} 1 Addition/Hops = 3 Additionen. Ferner werden die Clusterergebnisse zu Telegrammkorrelation addiert, d.h. 10 Cluster/Sprungmuster ^{∗} 1 Additionen/Cluster ^{∗} 3 Sprungmuster = 30 Additionen. In Summe ergeben sich 33 Additionen.

Wie sich zeigt ergibt sich eine Ersparnis, welche fast den Faktor drei (entspricht der Clusterlänge) beträgt. Diese Ersparnis kann genutzt werden, um mehrere Sprungmuster zu verwenden.

Starten zwei Übertragungen zum gleichen Zeitpunkt können beide detektiert und decodiert werden, wenn sie ein unterschiedliches Sprungmuster besitzen. Durch die Verwendung von verschiedenen Sprungmustern lässt sich somit die Übertragungssicherheit oder der Durchsatz steigern.

Bei Ausführungsbeispielen können (senderseitig oder wellenformseitig) Gruppen von Hops (sog. Cluster) innerhalb einer Gruppe ein gleiches relatives Zeit- und/oder Frequenzsprungmusters zueinander aufweisen (in die hier bezeichneten Cluster).

Bei Ausführungsbeispielen können (empfängerseitig oder decoderseitig) für die Detektion die Cluster (siehe Beschreibung Clustermethode oben) verwendet werden, um mit vereinfachtem Rechenaufwand Telegramme zu detektieren.

### Variable Anzahl an Hops

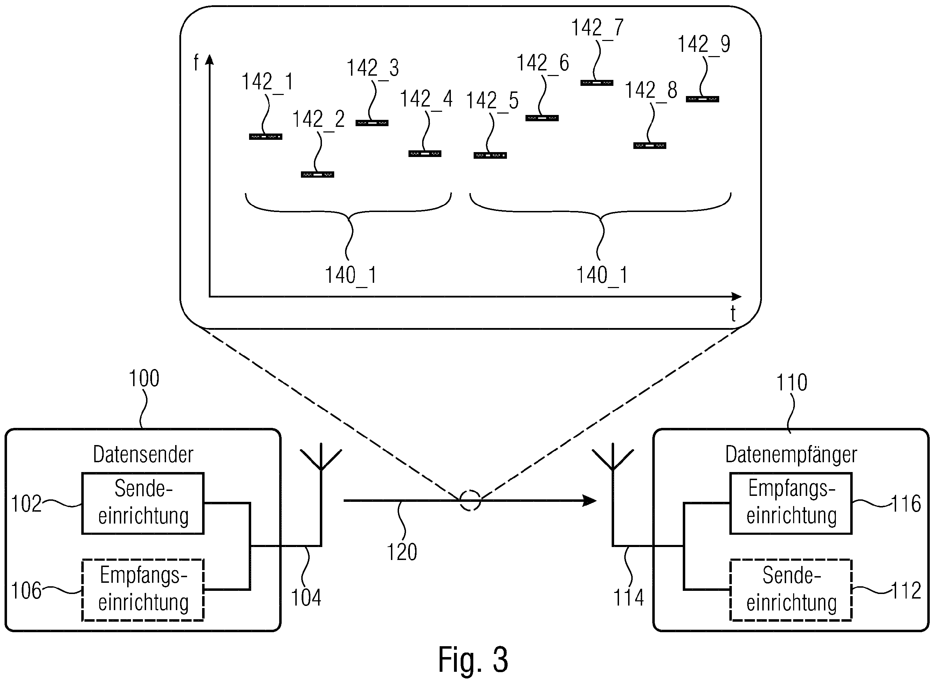

Fig. 3 zeigt ein schematisches Blockschaltbild eines Systems mit einem Datensender 100 und einem Datenempfänger 110, gemäß einem weiteren Ausführungsbeispiel der vorliegenden Erfindung.

Der Datensender 100 ist ausgebildet, um Daten 120 variabler Länge unter Verwendung eines ersten Zeitsprungmusters und/oder Frequenzsprungmusters 140_1 und unter Verwendung eines zweiten Zeitsprungmusters und/oder Frequenzsprungmusters 140_2 auszusenden, wobei das erste Zeitsprungmuster und/oder Frequenzsprungmuster 140_1 eine feste Länge aufweist, und wobei das zweite Zeitsprungmuster und/oder Frequenzsprungmuster 14_2 eine variable Länge aufweist.

Der Datenempfänger 110 ist ausgebildet, um die Daten 120 variabler Länge unter Verwendung eines ersten Zeitsprungmusters und/oder Frequenzsprungmusters 140_1 und unter Verwendung eines zweiten Zeitsprungmusters und/oder Frequenzsprungmusters 140_2 zu empfangen, wobei das erste Zeitsprungmuster und/oder Frequenzsprungmuster 140_1 eine feste Länge aufweist, und wobei das zweite Zeitsprungmuster und/oder Frequenzsprungmuster 140_2 eine variable Länge aufweist.

In Fig. 3 wird beispielshaft davon ausgegangen, dass die Daten unter Verwendung von zwei Frequenz- und Zeitsprungmustern (d.h. kombinierten Frequenzsprungmustern und Zeitsprungmustern) 140_1 und 140_2 übertragen werden. Natürlich können die Daten 120 auch nur unter Verwendung von reinen Frequenzsprungmustern oder Zeitsprungmustern übertragen werden.

Ein Frequenzsprungmuster kann eine Abfolge von Sendefrequenzen oder Sendefrequenzsprüngen sein mit denen der Datensender 100 die Daten sendet.

Beispielsweise kann ein erster Teil der Daten mit einer ersten Sendefrequenz (oder in einem ersten Frequenzkanal) und ein zweiter Teil der Daten mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Ein Zeitsprungmuster kann eine Abfolge von Sendezeitpunkten oder Sendezeitabständen sein mit denen der Datensender 100 die Daten sendet.

Beispielsweise kann ein erster Teil der Daten zu einem ersten Sendezeitpunkt (oder in einem ersten Sendezeitschlitz) und ein zweiter Teil der Daten zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben.

Bei Ausführungsbeispielen können die Daten 120 variabler Länge eine Mehrzahl von Datenpaketen 142_1 bis 142_n umfassen, die entsprechend des ersten Frequenzsprungmusters und/oder Zeitsprungmusters 140_1 und des zweiten Frequenzsprungmusters und/oder Zeitsprungmusters 140_2 von dem Datensender 100 zu dem Datenempfänger 110 übertragen werden.

In Fig. 3 umfassen die Daten 120 beispielhaft neun Datenpakete 142_1 bis 142_9, wobei vier Datenpakete 142_1 bis 142_4 der neun Datenpakete 142_1 bis 142_9 unter Verwendung des ersten Zeitsprungmusters und/oder Frequenzsprungmusters 140_1 übertragen werden, und wobei fünf Datenpakete 142_5 bis 142_9 der neun Datenpakete 142_1 bis 142_9 unter Verwendung des zweiten Zeitsprungmusters und/oder Frequenzsprungmusters 140_2 übertragen werden.

Die Daten können dabei so übertragen werden, dass zwischen den Datenpaketen 142_1 bis 142_n Sendepausen (Pausen in denen der Datensender nicht sendet) vorhanden sind.

Die Daten können ein Telegramm sein, dass in die Mehrzahl von Datenpaketen 142_1 bis 142_n aufgeteilt ist, wobei jedes der Mehrzahl von Datenpakete 142_1 bis 142_n kürzer ist als das Telegramm. Die Mehrzahl von Datenpaketen 142_1 bis 142_n enthalten somit jeweils einen unterschiedlichen oder sich überlappenden Teil der Daten bzw. des Telegramms, so dass die Daten nicht am Stück, sondern aufgeteilt auf die Datenpakete übertragen werden. Da die Datenpakete 142_1 bis 142_n (nur) einen Teil der Daten enthalten, werden diese hierin auch als Datensubpakete oder Teildatenpakete bezeichnet.

Bei Ausführungsbeispielen kann der Datensender 100 eine Sendeeinrichtung (Transmitter) 102 aufweisen, die ausgebildet ist, um die Daten 120 zu senden. Die Sendeeinrichtung 102 kann mit einer Antenne 104 des Datensenders 100 verbunden sein. Der Datensender 100 kann ferner eine Empfangseinrichtung (Receiver) 106 aufweisen, die ausgebildet ist, um Daten zu empfangen. Die Empfangseinrichtung kann mit der Antenne 104 oder einer weiteren Antenne des Datensenders 100 verbunden sein. Der Datensender 100 kann auch eine kombinierte Sendeempfangseinrichtung (Transceiver) aufweisen.

Der Datenempfänger 110 kann eine Empfangseinrichtung (Receiver) 116 aufweisen, die ausgebildet ist, um die Daten 120 zu empfangen. Die Empfangseinrichtung 116 kann mit einer Antenne 114 oder einer weiteren Antenne des Datenempfängers 110 verbunden sein. Ferner kann der Datenempfänger 110 eine Sendeeinrichtung (Transmitter) 112 aufweisen, die ausgebildet ist, um Daten zu senden. Die Sendeeinrichtung 112 kann mit der Antenne 114 des Datenempfängers 110 verbunden sein. Der Datenempfänger 110 kann auch eine kombinierte Sendeempfangseinrichtung (Transceiver) aufweisen.

Bei Ausführungsbeispielen kann der Datensender 100 ein Sensorknoten sein, während der Datenempfänger 110 eine Basisstation sein kann. Natürlich ist es auch möglich, dass der Datensender 100 eine Basisstation ist, während der Datenempfänger 110 ein Sensorknoten ist. Ferner ist es möglich, dass sowohl der Datensender 100 als auch der Datenempfänger 110 Sensorknoten sind. Des Weiteren ist es möglich, dass sowohl der Datensender 100 als auch der Datenempfänger 110 Basisstationen sind.

Im Folgenden werden detaillierte Ausführungsbeispiele des anhand von Fig. 3 vorgestellten Übertragungsverfahrens, das durch den Datensender 100 und den Datenempfänger 110 durchgeführt werden kann, näher erläutert.

Bisherige Systeme verwenden eine fest definierte Anzahl von Hops 142_1 bis 142_n, welche dem Empfänger bekannt sind. Hierdurch ist dem Empfänger zu jedem Zeitpunkt bekannt wie viele Hops 142_1 bis 142_n nach der Synchronisation noch zu empfangen hat. Sind jedoch weniger Nutzdaten vorhanden, als in das Telegramm codiert werden können, müssen zusätzliche Dummy-Daten eingefügt werden, welche im Empfänger wieder entfernt werden. Hierdurch wird jedoch die Kanalbelegung erhöht, obwohl diese Daten nicht übertragen werden müssten. Daraus resultiert eine höhere Kanalbelegung was eine höhere Wahrscheinlichkeit der Kollision mit anderen Teilnehmern zur Folge hat. Dies degradiert somit die Übertragungssicherheit.

Um variable Datenlängen zu realisieren, muss dem Empfänger die Information über die verwendete Telegrammlänge mitgeteilt werden. Es wäre beispielsweise möglich in einem vorherigen Telegramm die Länge des nächsten zu signalisieren.

Diese Ausführungsbeispiele gehen einen anderen Weg mit dem es doch möglich ist, die Länge direkt im übertragenen Telegramm zu signalisieren und somit den Aufwand für wenige zu übertragende Bits, die übertragungstechnisch nur durch viel zusätzliche Energie durch eine FEC zu schützen sind, zu sparen. Ein Telegramm wird hierfür in eine Kernsequenz (auch Coresequenz genannt) 140_1 und Erweiterungssequenz (auch Extensionsequenz genannt) 140_2 unterteilt. Die Kernsequenz 140_1 besitzt hierbei eine feste Länge, weiche somit eine Mindestlänge an die Telegramme darstellt. Innerhalb der Kernsequenz 140_1 wird die gesamte Länge des Telegramms (Kernsequenz + Erweiterungssequenz) signalisiert und der Empfänger kann nach erfolgreicher Dekodierung der Kernsequenz 140_1 auf die Erweiterungssequenz 140_2 schließen und diese empfangen.

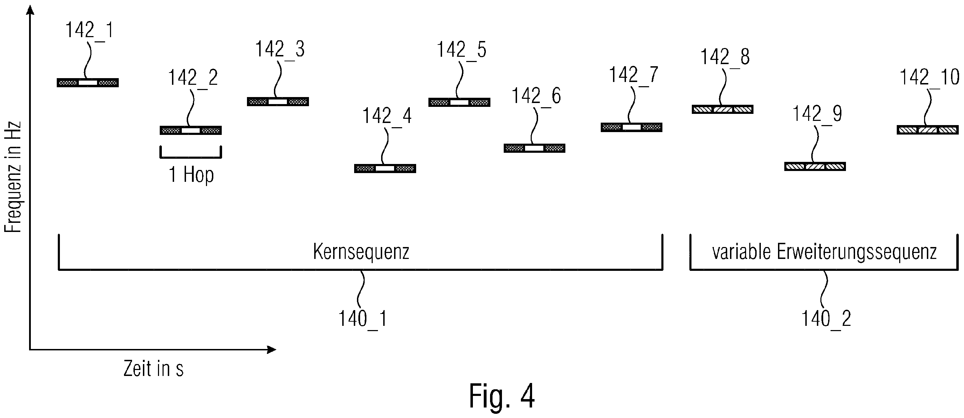

Fig. 4 zeigt in einem Diagramm eine Belegung eines Übertragungskanals bei der Übertagung einer Mehrzahl von Datenpaketen 142_1 bis 142_10 unter Verwendung eines ersten Zeit- und Frequenzsprungmusters 140_1 und eines zweites Zeit- und Frequenzsprungmuster 140_2. Dabei beschreibt die Ordinate die Frequenz und die Abszisse die Zeit.

Wie in Fig. 4 zu erkennen ist, können die Daten zehn Datenpakete 142_1 bis 142_10 umfassen, wobei sieben Datenpakete 142_1 bis 142_7 unter Verwendung des ersten Zeit- und Frequenzsprungmusters 140_1 übertragen werden, und wobei drei Datenpakete 142_8 bis 142_10 unter Verwendung des zweiten Zeit- und Frequenzsprungmusters 140_2 übertragen werden.

Das erste Zeit- und Frequenzsprungmuster 140_1 kann ein sogenanntes Kern-Sprungmuster sein, während das zweite Zeit- und Frequenzsprungmuster 140_2 ein Erweiterungs-Sprungmuster sein kann. Die Daten variabler Länge können Kern-Daten und Erweiterungs-Daten umfassen, wobei die Kern-Daten unter Verwendung des Kern-Musters 140_1 übertragen werden, und wobei die Erweiterungs-Daten unter Verwendung des Erweiterungs-Musters 140_2 übertragen werden. Kern-Daten können beispielsweise Daten sein, die immer zu übertragen sind, während Erweiterungs-Daten beispielsweise Daten sein können, die nur sporadisch zu übertragen sind.

Mit anderen Worten, Fig, 4 zeigt ein Telegramm mit Kern- und Erweiterungssequenz.

Im obigen beschriebenen Fall kann die Kanalcodierung jeweils getrennt auf die Kernsequenz und auf die Erweiterungssequenz angewendet werden. Natürlich kann die Kanalcodierung der Kern- und Erweiterungssequenz auch gemeinsam erfolgen.

Bei Ausführungsbeispielen kann (datensenderseitig bzw. wellenformseitig) die Anzahl der Hops variabel sein. Ferner kann die Anzahl der Hops signalisiert werden. Beispielsweise kann in der Kernsequenz die Menge der in einer Erweiterungssequenz folgenden Hops signalisiert werden.

Bei Ausführungsbeispielen kann (datensenderseitig bzw. decoderseitig) der Decoder die Länge decodieren und diese Information verwenden, um die Daten aller benötigten Hops zu sammeln um das gesamte Telegramm zu decodieren.

### Sprungmuster der Erweiterungsseguenz

Beim Einsatz des gleichen Musters (Zeitsprungmuster und/oder Frequenzsprungmuster) für die Erweiterungssequenz 140_2 wie in der Kernsequenz 140_1 kann es zu Totalüberlagerungen kommen, wenn die Übertagung der Erweiterungssequenz 140_2 zum "gleichen Zeitpunkt" wie die Übertragung eines weiteren Telegramms eines anderen Teilnehmers startet. Die Bezeichnung "gleicher Zeitpunkt" bezieht sich hierbei auf die Übertragungsdauer eines Hops. Innerhalb dieser Zeit sollte idealerweise kein weiteres Telegramm mit dem gleichen Sprungmuster starten.

Um die Störanfälligkeit der Telegramme weiter zu reduzieren, sollte somit das Sprungmuster nicht gleich dem der Kernsequenz sein.

Da die Erweiterungssequenz 140_2 beispielsweise nach der Kernsequenz 140_1 übertragen wird, ist die Synchronisation bereits erfolgt. Somit können die Hops beliebig in der Zeit und ggf. in der Frequenz verteilt werden, solange dem Empfänger die Positionen bekannt sind. Diese Information kann dem Empfänger signalisiert werden. Natürlich ist es auch möglich, dass die Kernsequenz 140_1 nach der Erweiterungssequenz 140_2 übertragen wird. In diesem Fall ist möglich, die Erweiterungssequenz 140_2 nach der Synchronisation bzw. Detektion der Kernsequenz 140_2 aus einem Empfangsdatenpuffer zu extrahieren.

Um für die Signalisierung des Sprungmusters keine weiteren Informationen übertragen zu müssen, kann für die Generierung des Musters beispielsweise ein Teil der übertragenen Nutzdaten oder die CRC (CRC = Cyclic Redundancy Check, dt. zyklische Redundanzprüfung) verwendet werden.

Mit Hilfe dieser Daten kann das Sprungmuster zum Beispiel aus einer Look-Up Taballe (LUT, dt. Umsetzungstabelle) gewonnen werden. Es ist ebenfalls möglich das Sprungmuster mit Hilfe der zur Verfügung stehenden Daten durch ein rückgekoppeltes Schieberegister (z.B. LFSR (LFSR = Linear Feedback Shift Register, dt. linear rückgekoppeltes Schieberegister) zu generieren. Die CRC oder ein anderer Teil der Nutzdaten kann hierbei als Seed (dt. Startwert) für das LFSR verwendet werden.
Vorteil dieser Methode ist, dass keine zusätzliche Signalisierungsinformation für das Sprungmuster übertragen werden muss. Dies reduziert die Kanalbelegung und somit auch die Störanfälligkeit der anderen Sensorknoten und ggf. Systeme im gleichen Frequenzband.

Bei Ausführungsbeispielen kann die CRC (oder andere Elemente) als pseudo-zufällige Zahl verwendet werden, die damit sowohl dem Sender als auch dem Empfänger bekannt sind. Der große Vorteil ist, dass die CRC fast zufällig ist, und keine weiteren Daten übertragen werden müssen.

Ein weiterer großer Vorteil dieser Methode ist, dass die Erweiterungssequenzen (fast) aller Teilnehmer unterschiedlich sind. So können im Fall, dass zwei Sender gleichzeitig mit unterschiedlichen Kernsequenzen ein Telegramm übertragen haben, auch die Erweiterungssequenzen parallel übertragen werden.

Bei Ausführungsbeispielen können (senderseitig bzw. wellenformseitig) Fehlerschutzdaten (z.B. CRC) oder andere Elemente bzw. Teile der Daten als pseudo-zufällige Zahl verwendet werden. Das Hop-Muster der Erweiterungssequenz kann variiert werden. Das Hop-Muster kann mit Hilfe der Fehlerschutzdaten (z.B. CRC) oder anderen übertragenen Daten definiert werden.

Bei Ausführungsbeispielen kann (empfängerseitig bzw. decoderseitig) der Decoder zuerst einen Teil decodieren, und Elemente aus diesem Teil verwenden, um Informationen über die Decodierung des Restes (oder anderen bzw. restlichen Teils) zu erhalten. Der Decoder kann die Fehlerschutzdaten (z.B. CRC) oder andere übertragenen Daten verwenden, um eine Information über den Aufbau bzw. die Decodierung des Restes (oder anderen bzw. restlichen Teils) zu erhalten.

Anstelle der Generierung des Sprungmusters für jedes Teilpaket 142_1 bis 142_n, können ähnlich wie in Bezug auf Fig. 1 bis 2 beschrieben mehrere Teilpakete zu einem Cluster oder Block zusammengefasst werden. Das Muster innerhalb dieses Clusters/Blocks kann unterschiedlich zu dem der Kernsequenz sein. Hierdurch reduziert sich die Breite der notwendigen Daten für die Generierung der Muster. Das reduziert die Rechenzeit bei Verwendung eines LFSR oder den Speicherverbrauch bei Verwendung von LUTs,

Das Sprungmuster innerhalb des Clusters kann ebenfalls aus einem Teil der übertragenen Daten gewonnen werden, wodurch zwischen mehreren Telegrammen die Störfestigkeit erhöht werden kann.

Bei Ausführungsbeispielen können (senderseitig bzw. wellenformseitig) Fehlerschutzdaten (z.B. CRC) oder andere Elemente bzw. Teile der Daten als pseudo-zufällige Zahl verwendet werden. Das Hop-Muster der Erweiterungssequenz kann variiert werden. Das Hop-Muster kann mit Hilfe der Fehlerschutzdaten (z.B. CRC) oder anderen übertragenen Daten definiert werden.

Bei Ausführungsbeispielen kann (empfängerseitig bzw. decoderseitig) der Decoder zuerst einen Teil decodieren, und Elemente aus diesem Teil verwenden, um Informationen über die Decodierung des Restes (oder anderen bzw. restlichen Teils) zu erhalten. Der Decoder kann Fehlerschutzdaten (z.B. CRC) oder andere übertragenen Daten verwenden, um eine Information über den Aufbau und/oder die Decodierung des Restes (oder anderen bzw. restlichen Teils) zu erhalten.

### Pilotsymbole in der Erweiterungssequenz

Wie bereits zuvor erwähnt, kann die Telegram-Synchronisation bereits auf der Basis der Kernsequenz 140_1 erfolgen. Aufgrund von Phaseninkontinuitäten zwischen den einzelnen Hops 142_1 bis 142_n ist es bei nicht differentiellen Übertragungsverfahren vorteilhaft in jeden Hop (oder in zumindest ein Teil der Hops) Pilotsymbole einzubringen um die absolute Phasenlage im Empfänger rekonstruieren zu können. Mit Hilfe dieser Pilotsymbole lässt sich in der Kernsequenz 140_1 zusätzlich das Paket detektieren, sowie der Zeit- und Frequenzoffset schätzen.

In der Erweiterungssequenz 140_2 ist die Synchronisation jedoch bereits erfolgt, wodurch nur noch die Phase der Hops in der Erweiterungssequenz geschätzt werden. Bei einem nicht konstantem Frequenzoffset kann zusätzlich die Frequenz der Hops in der Erweiterungssequenz geschätzt werden. Wenn mit der Übertragung des gesamten Telegramms (Kernsequenz + Erweiterungssequenz) die zulässige Kohärenzzeit (abhängig von verwendeten Quarz) überschritten wird, dann kann in der Erweiterungssequenz ebenfalls der Zeitoffset neu geschätzt werden.

Zur Reduktion von Fehldetektionen der Synchronisationseinheit im Empfänger können die Pilotsymbole der Erweiterungssequenz 140_2 eine andere Abfolge aufweisen. Diese Abfolge sollte mit der Pilotsequenz der Kernsequenz 140_1 eine möglichst geringe Kreuzkorrelation auf allen Stellen besitzen oder anderweitig unterscheiden. Beim Einsatz der gleichen Sequenz wie in der Kernsequenz 140_1 besitzt die Korrelation ein Maximum und könnte so einfacher zu einer Fehldetektionen führen.

Eine gute Variante für ein niedriges Kreuzkorrelationsergebnis ist eine Zufallssequenz. Da diese dem Empfänger für die Dekodierung jedoch bekannt sein muss, kann diese in ähnlicher Weise wie die Generierung des Sprungmusters aus der CRC oder einem Teil der Nutzerdaten gewonnen werden.

Bei Ausführungsbeispielen können (senderseitig bzw. wellenformseitig) abweichende Pilotsymbole in der Erweiterungssequenz verwendet werden. Das Pilotsymbolmuster kann mit Hilfe der Fehlerschutzdaten (z.B. CRC) oder anderen übertragenen Daten definiert werden.

Bei Ausführungsbeispielen kann (empfängerseitig bzw. decoderseitig) der Decoder ein anderes (abgespeichertes oder berechnetes) Pilotsymbolmuster für die Erweiterungssequenz verwenden. Nach der Dekodierung der Kernsequenz kann der Decoder anhand der empfangen Daten das Pilotsymbolmuster berechnen.

Anstelle der vollständigen Länge der Pilotsequenz wie in der Kernsequenz, kann die Länge reduziert werden. Dies ist möglich, da die Synchronisation und auch die Frequenz- und Zeitschätzung bereits erfolgt sind.

Um die Varianz der Phasenschätzung zu verbessern, ist es zusätzlich möglich zunächst die inneren Symbole zu dekodieren und diese dann mit Re-Enkodierung ebenfalls für die Phasenschätzung einzusetzen. Hierfür können die Symbole im Interleaver so sortiert werden, dass die ersten Symbole der zu übertragenen Daten um die Pilotsymbole verteilt werden.

Bei Ausführungsbeispielen können (senderseitig bzw. wellenformseitig) unterschiedliche Längen der Pilotsymbole innerhalb der Hops in der Kern- und der Erweiterungssequenz verwendet werden.

Bei Ausführungsbeispielen können (empfängerseitig bzw. decoderseitig) unterschiedliche Schätzgenauigkeiten der Phasenschätzung in der Kern- und Erweiterungssequenz vorliegen. Unter Umständen können verschiedene Schätzalgorithmen für die Kern- und Erweiterungssequenz verwendet werden. Die Erweiterungssequenz kann iterativ dekodiert

### Verteilung der zusätzlichen Erweiterungssequenz

Im Normalfall kann die Erweiterungssequenz 140_2 hinten an die Kernsequenz 140_1 angestellt werden. Hierdurch lässt sich zunächst die Kernsequenz 140_1 und anschließend die Erweiterungssequenz 140_2 dekodieren. Dies hat jedoch den Nachteil, dass bei nur wenigen zusätzlichen Daten zur Kernsequenz 140_1 nur eine kurze Erweiterungssequenz 140_2 hintenangestellt wird. Tritt nun ein verhältnismäßig langer Störer auf, können sehr viele Teilpakete (oder Datenpakete) der Erweiterungssequenz gestört werden.

Anstelle alle Teilpakete (oder Datenpakete) nach der Kernsequenz 140_1 hintenanzustellen, können diese auch vor der Kernsequenz 140_1 angefügt werden. Im Empfänger kann zunächst in gewohnter Weise die Kernsequenz (oder das Kern-Paket) dekodiert werden. Anschließend können aus einem Puffer bzw. Zwischenspeicher der vorne angestellte Teil der Erweiterungssequenz 140_2 geladen werden. Nachdem alle Teilpakete (Datenpakete) aus dem Puffer vorhanden sind und die Teilpakete hinter der Kernsequenz 140_1 empfangen wurden, kann die Dekodierung in gleicher Weise wie zuvor erfolgen.

Bei Ausführungsbeispielen kann (senderseitig bzw. wellenformseitig) die Erweiterungssequenz in zwei Teile aufgeteilt werden. Die Beiden Teile der Erweiterungssequenz 140_2 können vor und nach der Kernsequenz 140_1 angeordnet werden.

Bei Ausführungsbeispielen kann (empfängerseitig bzw. decoderseitig) eine Dekodierung oder Teildekodierung der Kernsequenz wie zuvor erfolgen. Die Daten der Erweiterungssequenz können aus einem Signalpuffer ausgeschnitten werden.

Es ist ebenfalls möglich Teilpakete (oder Datenpakete) der Erweiterungssequenz 140_2 zwischen die Teilpakete der Kernsequenz 14°_1 einzubringen, falls der Abstand zwischen zwei Teilpaketen größer als die Dauer eines Teilpakets ist. Dies hat den Vorteil, dass die gesamte Übertragungsdauer bei zeitkritischen Anwendungen reduziert werden kann.

Bei Ausführungsbeispielen kann (senderseitig bzw. wellenformseitig) die Erweiterungssequenz in zwei Teile aufgeteilt werden. Die Beiden Teile der Erweiterungssequenz 140_2 können vor und nach der Kernsequenz 140_1 angeordnet werden.

Bei Ausführungsbeispielen kann (empfängerseitig bzw, decoderseitig) eine Dekodierung oder Teildekodierung der Kernsequenz wie zuvor erfolgen. Die Daten der Erweiterungssequenz können aus einem Signalpuffer ausgeschnitten werden.

Werden Telegramme mit sehr vielen Nutzdaten übertragen, ergeben sich sehr viele Hops für die Erweiterungssequenz 140_2 relativ zur Kernsequenz 140_1. Durch die variablen Datenlängen ändert sich, abhängig von der Länge der Nutzerdaten, die Anzahl an möglichen Telegrammen, welches pro genutzten Band übertragen werden kann. Sind die Längen der Nutzdaten bei der Berechnung der möglichen Telegramme pro Band und Zeiteinheit nicht bekannt, lässt sich nur eine grobe Abschätzung treffen.

Dieses Problem kann umgangen werden, wenn die Übertragung der Erweiterungssequenz 140_2 in einem separaten Frequenzband stattfindet. In diesem Fall lässt sich der Durchsatz auf Basis der Kernsequenz 140_1 für das eine Band und die Erweiterungssequenz 140_2 für das andere Band separat berechnen.

Dies bietet zusätzlich den großen Vorteil, dass die Übertragungssicherheit weiter erhöht wird, da mehr Frequenzressourcen zur Übertragung genutzt werden können. Prinzipiell könnte die höhere Übertragungssicherheit auch durch ein insgesamt größeres Band (Frequenzband) realisiert werden, jedoch muss dann die Detektion auch über das erweiterte Band berechnet werden, was eine höhere Rechenleistung benötigt.

Bei Ausführungsbeispielen kann (senderseitig bzw. wellenformseitig) eine getrennte Übertragung von Kern- und Erweiterungssequenz in verschiedenen Bändern erfolgen.

Bei Ausführungsbeispielen kann (empfängerseitig bzw. decoderseitig) eine Detektion der Pakete nur in einem Teilbereich des verwendeten Frequenzbandes stattfinden. Die Daten der Erweiterungssequenz können aus einem Signalpuffer ohne eigene Detektion ausgeschnitten bzw. extrahiert werden.

Werden Telegramme mit sehr vielen Nutzdaten übertragen, ergeben sich sehr viele Hops für die Erweiterungssequenz 140_2 relativ zur Kernsequenz 140_1. Hieraus ergeben sich sehr lange Übertragungsdauern, in denen der Kanal belegt ist (engl. on air time). Findet die Übertragung in den nicht lizensierten SRD (SRD = Short Range Devices, dt. Kurzstreckenfunk) oder ISM (ISM = Industrial, Scientific and Medical Band, dt. Frequenzbereiche, die durch Hochfrequenz-Geräte in Industrie, Wissenschaft Medizin, in häuslichen und ähnlichen Bereichen genutzt werden können) Bändern statt, in denen eine Begrenzung des DutyCycle (dt. Aussteuergrad) (on air time) vorgeschrieben ist, können somit nur eine bestimmte Anzahl an Telegrammen pro Zeiteinheit übertragen werden.

Um diese Anzahl an Telegrammen zu erhöhen, kann die Erweiterungssequenz 140_2 eine andere Datenrate als die Kernsequenz ' 140_1 besitzen. Die verwendete Datenrate der Erweiterungssequenz 140_2 kann in der Kernsequenz 140_1 signalisiert werden. Um eine Reduktion des verwendeten DutyCycle zu erhalten, kann die Datenrate in der Erweiterungssequenz 140_2 erhöht werden.

Diese Methode bietet den weiteren Vorteil, dass bei gleichbleibender Übertragungsrate die Kanalbelegung verringert wird. Dies begünstigt andere Systeme, welche ebenfalls das gleiche Frequenzband nutzen. Die variablen Datenraten werden dabei alle mit der gleichen Synchronisation detektiert und synchronisiert, ohne zusätzlichen Rechenaufwand.

Bei Ausführungsbeispielen kann (senderseitig bzw. wellenformseitig) eine getrennte Übertragung von Kern- und Erweiterungssequenz mit verschiedenen Datenraten erfolgen.

Bei Ausführungsbeispielen kann (empfängerseitig bzw. decoderseitig) der Empfänger nach der Detektion die Parameter für die Decodierung der Empfangssymbole ändern. Die Daten der Erweiterungssequenz können aus einem Signalpuffer ohne eigene Detektion ausgeschnitten bzw. extrahiert werden.

### Weitere Ausführungsbeispiele

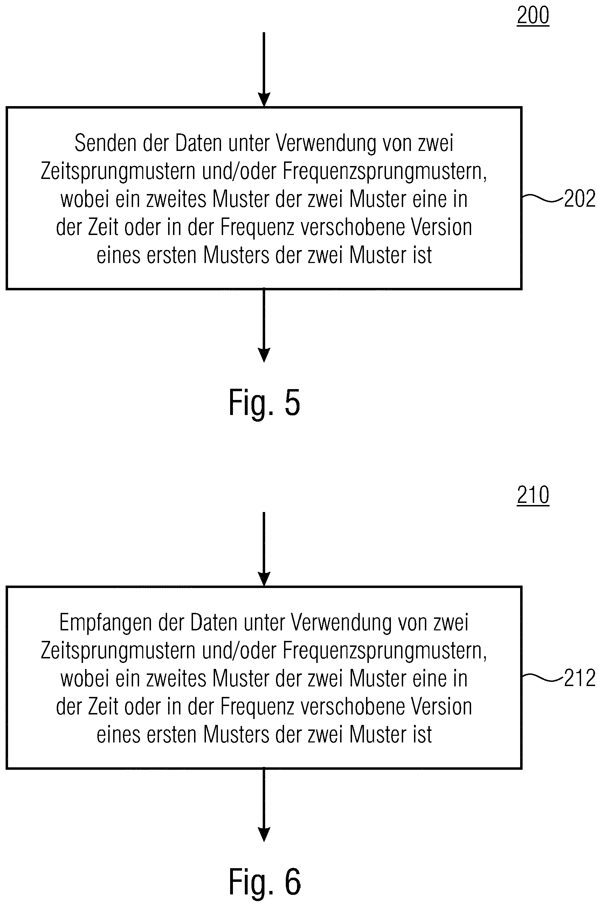

Fig. 5 zeigt ein Flussdiagramm eines Verfahrens 200 zum Senden von Daten. Das Verfahren 200 umfasst einen Schritt 202 des Sendens der Daten unter Verwendung von zwei Zeitsprungmustern und/oder Frequenzsprungmustern, wobei ein zweites Muster der zwei Muster eine in der Zeit und/oder in der Frequenz verschobene Version eines ersten Musters der zwei Muster ist.

Fig. 6 zeigt ein Flussdiagramm eines Verfahrens 210 zum Empfangen von Daten. Das Verfahren umfasst einen Schritt 212 des Empfangens der Daten unter Verwendung von zwei Zeitsprungmustern und/oder Frequenzsprungmustern, wobei ein zweites Muster der zwei Muster eine in der Zeit und/oder in der Frequenz verschobene Version eines ersten Musters der zwei Muster ist.

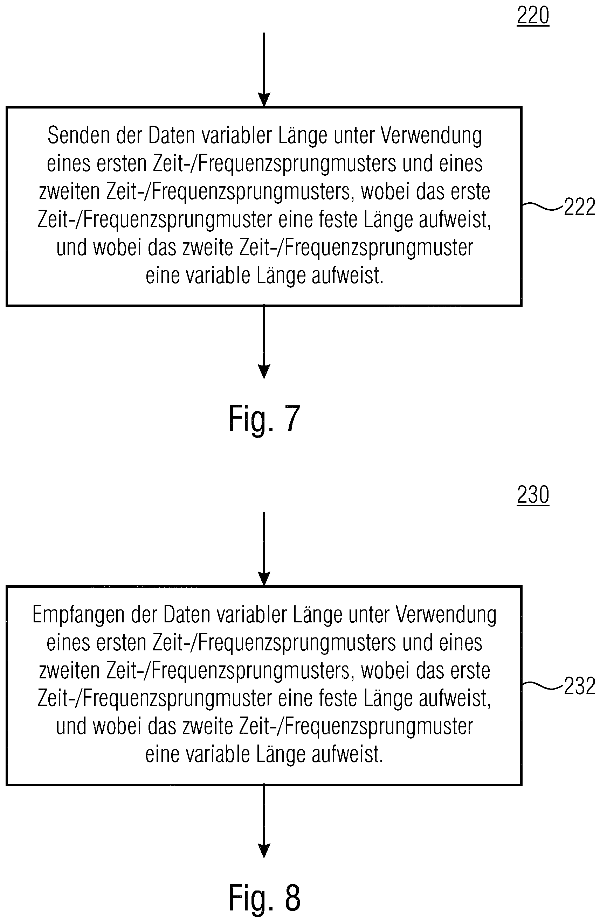

Fig. 7 zeigt ein Flussdiagramm eines Verfahrens 220 zum Senden von Daten. Das Verfahren umfasst einen Schritt 222 des Sendens der Daten variabler Länge unter Verwendung eines ersten Zeit-/Frequenzsprungmusters und eines zweiten Zeit-/Frequenzsprungmusters, wobei das erste Zeit-/Frequenzsprungmuster eine feste Länge aufweist, und wobei das zweite Zeit-/Frequenzsprungmuster eine variable Länge aufweist.

Fig. 8 zeigt ein Flussdiagramm eines Verfahrens 230 zum Empfangen von Daten. Das Verfahren umfasst einen Schritt 232 des Empfangens der Daten variabler Länge unter Verwendung eines ersten Zeit-/Frequenzsprungmusters und eines zweiten Zeit-/Frequenzsprungmusters, wobei das erste Zeit-/Frequenzsprungmuster eine feste Länge aufweist, und wobei das zweite Zeit-/Frequenzsprungmuster eine variable Länge aufweist.

Bei Ausführungsbeispielen werden Cluster von Hops für eine einfachere Detektion verwendet.

Bei Ausführungsbeispielen können variable Paketlängen durch die Erweiterungssequenz übertragen werden.

Bei Ausführungsbeispielen kann das Muster der Erweiterungssequenz auf Fehlerschutzdaten (z.B. CRC) basieren.

Ausführungsbeispiele schaffen ein System zur Übertragung von Daten von vielen Sensorknoten zu einer Basisstation. Die hierin beschriebenen Konzepte können jedoch für jede beliebige Übertragung eingesetzt werden, falls der Kanal nicht koordiniert (ALOHA oder Slotted-ALOHA Zugriffsverfahren) ist und der Empfänger somit nicht weiß wann ein Paket übertragen wird. Zusätzlich kann es hierdurch zu Überlagerungen mit anderen Teilnehmern kommen, was Störungen während der Übertragung hervorruft.

Das genutzte Funkübertragungsband kann, muss aber hierbei nicht exklusiv für diese Übertragung reserviert sein. Die Frequenzressource kann mit vielen weiteren Systemen geteilt werden, was eine zuverlässige Übertragung der Information erschwert.

Ausführungsbeispiele schaffen ein Konzept zur Detektion der Präambel, mit dessen Hilfe die Rechenleistung im Empfänger stark reduziert werden kann,

Ausführungsbeispiele schaffen ein Konzept, welches es ermöglicht, ohne vorherige Signalisierung (in einem vorherigen Telegramm) variable Telegrammlängen zu übertragen. Hierbei wird ein Telegramm in eine Kernsequenz und eine Erweiterungssequenz unterteilt.

Ausführungsbeispiele schaffen ein Konzept, welches eine Störfestigkeit der Erweiterungssequenz erhöht und eine Fehlerdetektionsrate der Synchronisation verringert.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte öder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) oder eine Grafikkarte (GPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden, Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Datensender (100), der ausgebildet ist, um Daten (120) variabler Länge unter Verwendung eines ersten Zeitsprungmusters (140_1) und/oder Frequenzsprungmusters (140_1) und unter Verwendung eines zweiten Zeitsprungmusters (140_2) und/oder Frequenzsprungmusters (140_2) auszusenden, wobei das erste Zeitsprungmuster (140_1) und/oder Frequenzsprungmuster (140_1) eine feste Länge aufweist, und wobei das zweite Zeitsprungmuster (140_2) und/oder Frequenzsprungmuster (140_2) eine variable Länge aufweist;
wobei der Datensender (100) ausgebildet ist, um das zweite Zeitsprungmuster (140_2) und/oder Frequenzsprungmuster (140_2) basierend auf dem Teil der in dem ersten Zeitsprungmuster (140_1) und/oder Frequenzsprungmuster (140_1) enthaltenen Daten zu generieren;
wobei die in dem ersten Zeitsprungmuster und/oder Frequenzsprungmuster enthaltenen Daten Fehlerschutzdaten aufweisen, wobei der Datensender (100) ausgebildet ist, um das zweite Zeitsprungmuster (140_2) und/oder Frequenzsprungmuster (140_2) basierend auf den Fehlerschutzdaten oder einem Teil der Fehlerschutzdaten zu generieren.

2. Datensender (100) nach Anspruch 1, wobei die Daten (120) eine Mehrzahl von Datenpaketen (142_1:142_n) umfassen, wobei das erste Zeitsprungmuster (140_1) und/oder Frequenzsprungmuster (140_1) eine feste Anzahl der Mehrzahl von Datenpaketen (142_1:142_n) aufweist, und wobei das zweite Zeitsprungmuster (140_2) und/oder Frequenzsprungmuster (140_2) eine variable Anzahl der Mehrzahl von Datenpaketen (142_1:142_n) aufweist.

3. Datensender (100) nach einem der Ansprüche 1 bis 2, wobei sich das erste Zeitsprungmuster (140_1) und/oder Frequenzsprungmuster (140_1) und das zweite Zeitsprungmuster (140_2) und/oder Frequenzsprungmuster (140_2) auch im Falle gleicher Länge voneinander unterscheiden.

4. Datensender (100) nach einem der Ansprüche 1 bis 3, wobei der Datensender (100) ausgebildet ist, um einen Teil der in dem ersten Zeitsprungmuster (140_1) und/oder Frequenzsprungmuster (140_1) enthaltenen Daten zur Signalisierung der Länge des zweiten Zeitsprungmusters (140_2) und/oder Frequenzsprungmusters (140_2) zu verwenden.

5. Datensender (100) nach einem der Ansprüche 1 bis 4, wobei der Datensender (100) ausgebildet ist, um eine Synchronisationssequenz für das zweite Zeitsprungmuster (140_2) und/oder Frequenzsprungmuster (140_2) basierend auf einem Teil der in dem ersten Zeitsprungmuster (140_1) und/oder Frequenzsprungmuster (140_1) enthaltenen Daten zu generieren.

6. Datensender (100) nach einem der Ansprüche 1 bis 5, wobei der Datensender (100) ausgebildet ist, um das erste Zeitsprungmuster (140_1) und/oder Frequenzsprungmuster (140_1) und das zweite Zeitsprungmuster (140_2) und/oder Frequenzsprungmuster (140_2) mit unterschiedlichen Synchronisationssequenzen zu versehen.

7. Datenempfänger (110), der ausgebildet ist, um Daten (120) variabler Länge unter Verwendung eines ersten Zeitsprungmusters (140_1) und/oder Frequenzsprungmusters (140_1) und eines zweiten Zeitsprungmusters (140_2) und/oder Frequenzsprungmusters (140_2) zu empfangen, wobei das erste Zeitsprungmuster (140_1) und/oder Frequenzsprungmuster (140_1) eine feste Länge aufweist, und wobei das zweite Zeitsprungmuster (140_2) und/oder Frequenzsprungmuster (140_2) eine variable Länge aufweist;
wobei der Datenempfänger (110) ausgebildet ist, um das zweite Zeitsprungmuster (140_2) und/oder Frequenzsprungmuster (140_2) basierend auf einem Teil der in dem ersten Zeitsprungmuster (140_1) und/oder Frequenzsprungmuster (140_1) enthaltenen Daten zu generieren;
wobei der Datenempfänger (110) ausgebildet ist, um das zweite Zeitsprungmuster (140_2) und/oder Frequenzsprungmuster (140_2) basierend auf Fehlerschutzdaten oder einem Teil der Fehlerschutzdaten, die in den in dem ersten Zeitsprungmuster (140_1) und/oder Frequenzsprungmuster (140_1) enthaltenen Daten enthalten sind, zu generieren.

8. Datenempfänger (110) nach Anspruch 7, wobei der Datenempfänger (110) ausgebildet ist, um eine Länge des zweiten Zeitsprungmusters (140_2) und/oder Frequenzsprungmusters (140_2) aus den in dem ersten Zeitsprungmuster (140_1) und/oder Frequenzsprungmuster (140_1) enthaltenen Daten zu ermitteln.

9. Datenempfänger (110) nach einem der Ansprüche 7 bis 8, wobei die Daten (120) eine Mehrzahl von Datenpaketen (142_1:142_n) umfassen, wobei das erste Zeitsprungmuster (140_1) und/oder Frequenzsprungmuster (140_1) eine feste Anzahl der Mehrzahl von Datenpaketen (142_1:142_n) aufweist, und wobei das zweite Zeitsprungmuster (140_2) und/oder Frequenzsprungmuster (140_2) eine variable Anzahl der Mehrzahl von Datenpaketen (142_1:142_n) aufweist.

10. Datenempfänger (110) nach einem der Ansprüche 7 bis 9, wobei ein Teil der in dem ersten Zeitsprungmuster (140_1) und/oder Frequenzsprungmuster (140_1) enthaltenen Daten zur Signalisierung der Länge des zweiten Zeitsprungmusters (140_2) und/oder Frequenzsprungmusters (140_2) verwendet wird;
wobei der Datenempfänger (110) ausgebildet ist, um die Länge des zweiten Zeitsprungmusters (140_2) und/oder Frequenzsprungmusters (140_2) aus dem Teil der in dem ersten Zeitsprungmuster (140_1) und/oder Frequenzsprungmuster (140_1) enthaltenen Daten zu ermitteln.

11. Datenempfänger (110) nach einem der Ansprüche 7 bis 10, wobei der Datenempfänger (110) ausgebildet ist, um eine Referenzsynchronisationssequenz basierend auf einem Teil der in dem ersten Zeitsprungmuster (140_1) und/oder Frequenzsprungmuster (140_1) enthaltenen Daten zu generieren;
wobei der Datenempfänger (110) ausgebildet ist, um die unter Verwendung des zweiten Zeitsprungmusters (140_2) und/oder Frequenzsprungmusters (140_2) zu empfangenen Daten (120) unter Verwendung der Referenzsynchronisationssequenz zu empfangen.

12. System, mit folgenden Merkmalen:
einem Datensender (100) nach einem der Ansprüche 1 bis 6; und
einem Datenempfänger (110) nach einem der Ansprüche 7 bis 11.

13. Verfahren (220) zum Senden von Daten variabler Länge, mit folgendem Schritt:
Senden (222) der Daten variabler Länge unter Verwendung eines ersten Zeit-/Frequenzsprungmusters und eines zweiten Zeit-/Frequenzsprungmusters, wobei das erste Zeit-/Frequenzsprungmuster eine feste Länge aufweist, und wobei das zweite Zeit-/Frequenzsprungmuster eine variable Länge aufweist;
wobei das zweite Zeitsprungmuster (140_2) und/oder Frequenzsprungmuster (140_2) basierend auf einem Teil der in dem ersten Zeitsprungmuster (140_1) und/oder Frequenzsprungmuster (140_1) enthaltenen Daten generiert ist; und
wobei das zweite Zeitsprungmuster (140_2) und/oder Frequenzsprungmuster (140_2) basierend auf Fehlerschutzdaten oder einem Teil der Fehlerschutzdaten, die in den in dem ersten Zeitsprungmuster (140_1) und/oder Frequenzsprungmuster (140_1) enthaltenen Daten enthalten sind, generiert ist.

14. Verfahren (230) zum Empfangen von Daten variabler Länge, mit folgendem Schritt:
Empfangen (232) der Daten variabler Länge unter Verwendung eines ersten Zeit-/Frequenzsprungmusters und eines zweiten Zeit-/Frequenzsprungmusters, wobei das erste Zeit-/Frequenzsprungmuster eine feste Länge aufweist, und wobei das zweite Zeit-/Frequenzsprungmuster eine variable länge aufweist;
wobei das zweite Zeitsprungmuster (140_2) und/oder Frequenzsprungmuster (140_2) basierend auf einem Teil der in dem ersten Zeitsprungmuster (140_1) und/oder Frequenzsprungmuster (140_1) enthaltenen Daten generiert ist;
wobei das zweite Zeitsprungmuster (140_2) und/oder Frequenzsprungmuster (140_2) basierend auf Fehlerschutzdaten oder einem Teil der Fehlerschutzdaten, die in den in dem ersten Zeitsprungmuster (140_1) und/oder Frequenzsprungmuster (140_1) enthaltenen Daten enthalten sind, generiert ist.

15. Computerprogramm, umfassend Befehle, die bei der Ausführung des Programms durch den Computer diesen veranlassen, ein Verfahren nach einem der Ansprüche 13 bis 14 auszuführen.

## Claims

1. Data transmitter (100) configured to send out data (120) of variable lengths while using a first time hopping pattern (140_1) and/or frequency hopping pattern (140_1) and while using a second time hopping pattern (140_2) and/or frequency hopping pattern (140_2), the first time hopping pattern (140_1) and/or frequency hopping pattern (140_1) comprising a fixed length and the second time hopping pattern (140_2) and/or frequency hopping pattern (140_2) comprising a variable length;
the data transmitter (100) being configured to generate the second time hopping pattern (140_2) and/or frequency hopping pattern (140_2) on the basis of the portion of the data contained within the first time hopping pattern (140_1) and/or frequency hopping pattern (140_1);
wherein the data contained in the first time hopping pattern and/or frequency hopping pattern comprises error protection data, the data transmitter (100) being configured to generate the second time hopping pattern (140_2) and/or frequency hopping pattern (140_2) on the basis of the error protection data or of a portion of the error protection data.

2. Data transmitter (100) as claimed in claim 1, wherein the data (120) includes a plurality of data packets (142_1:142_n), the first time hopping pattern (140_1) and/or frequency hopping pattern (140_1) comprising a fixed number of the plurality of data packets (142_1:142_n), and the second time hopping pattern (140_2) and/or frequency hopping pattern (140_2) comprising a variable number of the plurality of data packets (142_1:142_n).

3. Data transmitter (100) as claimed in any of claims 1 to 2, wherein the first time hopping pattern (140_1) and/or frequency hopping pattern (140_1) and the second time hopping pattern (140_2) and/or frequency hopping pattern (140_2) differ from one other even in the event that they have equal lengths.

4. Data transmitter (100) as claimed in any of claims 1 to 3, the data transmitter (100) being configured to use a portion of the data contained within the first time hopping pattern (140_1) and/or frequency hopping pattern (140_1) for signaling the length of the second time hopping pattern (140_2) and/or frequency hopping pattern (140_2).

5. Data transmitter (100) as claimed in any of claims 1 to 4, the data transmitter (100) being configured to generate a synchronization sequence for the second time hopping pattern (140_2) and/or frequency hopping pattern (140_2) on the basis of a portion of the data contained within the first time hopping pattern (140_1) and/or frequency hopping pattern (140_1).

6. Data transmitter (100) as claimed in any of claims 1 to 5, the data transmitter (100) being configured to provide the first time hopping pattern (140_1) and/or frequency hopping pattern (140_1) and the second time hopping pattern (140_2) and/or frequency hopping pattern (140_2) with different synchronization sequences.

7. Data receiver (110) configured to receive data (120) of variable lengths while using a first time hopping pattern (140_1) and/or frequency hopping pattern (140_1) and while using a second time hopping pattern (140_2) and/or frequency hopping pattern (140_2), the first time hopping pattern (140_1) and/or frequency hopping pattern (140_1) comprising a fixed length, and the second time hopping pattern (140_2) and/or frequency hopping pattern (140_2) comprising a variable length;
the data receiver (110) being configured to generate the second time hopping pattern (140_2) and/or frequency hopping pattern (140_2) on the basis of a portion of the data contained within the first time hopping pattern (140_1) and/or frequency hopping pattern (140_1);
the data receiver (110) being configured to generate the second time hopping pattern (140_2) and/or frequency hopping pattern (140_2) on the basis of error protection data or of a portion of the error protection data contained within the data contained within the first time hopping pattern (140_1) and/or frequency hopping pattern (140_1).

8. Data receiver (110) as claimed in claim 7, the data receiver (110) being configured to determine a length of the second time hopping pattern (140_2) and/or frequency hopping pattern (140_2) from the data contained within the first time hopping pattern (140_1) and/or frequency hopping pattern (140_1).

9. Data receiver (110) as claimed in any of claims 7 to 8, wherein the data (120) comprises a plurality of data packets (142_1:142_n), the first time hopping pattern (140_1) and/or frequency hopping pattern (140_1) comprising a fixed number of the plurality of data packets (142_1:142_n), and the second time hopping pattern (140_2) and/or frequency hopping pattern (140_2) comprising a variable number of the plurality of data packets (142_1:142_n).

10. Data receiver (110) as claimed in any of claims 7 to 9, wherein a portion of the data contained within the first time hopping pattern (140_1) and/or frequency hopping pattern (140_1) is used for signaling the length of the second time hopping pattern (140_2) and/or frequency hopping pattern (140_2);
the data receiver (110) being configured to determine the length of the second time hopping pattern (140_2) and/or frequency hopping pattern (140_2) from the portion of the data contained within the first time hopping pattern (140_1) and/or frequency hopping pattern (140_1).

11. Data receiver (110) as claimed in any of claims 7 to 10, the data receiver (110) being configured to generate a reference synchronization sequence on the basis of a portion of the data contained within the first time hopping pattern (140_1) and/or frequency hopping pattern (140_1);
the data receiver (110) being configured to receive the data (120), which is to received while using the second time hopping pattern (140_2) and/or frequency hopping pattern (140_2), while using the reference synchronization sequence.

12. System comprising:
a data transmitter (100) as claimed in any of claims 1 to 6; and
a data receiver (110) as claimed in any of claims 7 to 11.

13. Method (220) of transmitting data of variable lengths, comprising:
transmitting (222) the data of variable lengths while using a first time/frequency hopping pattern and a second time/frequency hopping pattern, the first time/frequency hopping pattern comprising a fixed length, and the second time/frequency hopping pattern comprising a variable length;
wherein the second time hopping pattern (140_2) and/or frequency hopping pattern (140_2) is generated on the basis of a portion of the data contained within the first time hopping pattern (140_1) and/or frequency hopping pattern (140_1); and
wherein the second time hopping pattern (140_2) and/or frequency hopping pattern (140_2) is generated on the basis of error protection data or of a portion of the error protection data contained within the data contained within the first time hopping pattern (140_1) and/or frequency hopping pattern (140_1).

14. Method (230) of receiving data of variable lengths, comprising:
receiving (232) the data of variable lengths while using a first time/frequency hopping pattern and a second time/frequency hopping pattern, the first time/frequency hopping pattern comprising a fixed length, and the second time/frequency hopping pattern comprising a variable length;
wherein the second time hopping pattern (140_2) and/or frequency hopping pattern (140_2) is generated on the basis of a portion of the data contained within the first time hopping pattern (140_1) and/or frequency hopping pattern (140_1);
wherein the second time hopping pattern (140_2) and/or frequency hopping pattern (140_2) is generated on the basis of error protection data or of a portion of the error protection data contained within the data contained within the first time hopping pattern (140_1) and/or frequency hopping pattern (140_1).

15. Computer program including instructions that, when the program is being performed by the computer, cause the same to perform a method as claimed in any of claims 13 to 14.

## Revendications

1. Emetteur de données (100) qui est conçu pour émettre des données (120) de longueur variable à l'aide d'un premier modèle de saut dans le temps (140_1.) et/ou modèle de saut en fréquence (140_1) et à l'aide d'un deuxième modèle de saut dans le temps (140_2) et/ou modèle de saut en fréquence (140_2), dans lequel le premier modèle de saut dans le temps (140_1) et/ou modèle de saut en fréquence (140_1) présente une longueur fixe, et dans lequel le deuxième modèle de saut dans le temps (140_2) et/ou modèle de saut en fréquence (140_2) présente une longueur variable;
dans lequel l'émetteur de données (100) est conçu pour générer le deuxième modèle de saut dans le temps (140_2) et/ou modèle de saut en fréquence (140_2) sur base de la partie des données contenues dans le premier modèle de saut dans le temps (140_1) et/ou modèle de saut en fréquence (140_1);
dans lequel les données contenues dans le premier modèle de saut dans le temps et/ou modèle de saut en fréquence présentent des données de protection contre les erreurs, où l'émetteur de données (100) est conçu pour générer le deuxième modèle de saut dans le temps (140_2) et/ou modèle de saut en fréquence (140_2) sur base des données de protection contre les erreurs ou d'une partie des données de protection contre les erreurs.

2. Emetteur de données (100) selon la revendication 1, dans lequel les données (120) comportent une pluralité de paquets de données (142_1:142_n), dans lequel le premier modèle de saut dans le temps (140_1) et/ou modèle de saut en fréquence (140_1) présente un nombre fixe de la pluralité de paquets de données (142_1:142_n), et le deuxième modèle de saut dans le temps (140_2) et/ou modèle de saut en fréquence (140_2) présente un nombre variable de la pluralité de paquets de données (142_1:142_n).

3. Emetteur de données (100) selon l'une des revendications 1 à 2, dans lequel le premier modèle de saut dans le temps (140_1) et/ou modèle de saut en fréquence (140_1) et le deuxième modèle de saut dans le temps (140_2) et/ou modèle de saut en fréquence (140_2) différent l'un de l'autre même en cas de même longueur.

4. Emetteur de données (100) selon l'une des revendications 1 à 3, dans lequel l'émetteur de données (100) est conçu pour utiliser une partie des données contenues dans le premier modèle de saut dans le temps (140_1) et/ou modèle de saut en fréquence (140_1) pour signaler la longueur du deuxième modèle de saut dans le temps (140_2) et/ou modèle de saut en fréquence (140_2).

5. Emetteur de données (100) selon l'une des revendications 1 à 4, dans lequel l'émetteur de données (100) est conçu pour générer une séquence de synchronisation pour le deuxième modèle de saut dans le temps (140_2) et/ou modèle de saut en fréquence (140_2) sur base d'une partie des données contenues dans le premier modèle de saut dans le temps (140_1) et/ou modèle de saut en fréquence (140_1).

6. Emetteur de données (100) selon l'une des revendications 1 à 5, dans lequel l'émetteur de données (100) est conçu pour pourvoir le premier modèle de saut dans le temps (140_1) et/ou modèle de saut en fréquence (140_1) et le deuxième modèle de saut dans le temps (140_2) et/ou modèle de saut en fréquence (140_2) de différentes séquences de synchronisation.

7. Récepteur de données (110) qui est conçu pour recevoir des données (120) de longueur variable à l'aide d'un premier modèle de saut dans le temps (140_1) et/ou modèle de saut en fréquence (140_1) et d'un deuxième modèle de saut dans le temps (140_2) et/ou modèle de saut en fréquence (140_2), dans lequel le premier modèle de saut dans le temps (140_1) et/ou modèle de saut en fréquence (140_1) présente une longueur fixe, et dans lequel le deuxième modèle de saut dans le temps (140_2) et/ou modèle de saut en fréquence (140_2) présente une longueur variable;
dans lequel le récepteur de données (110) est conçu pour générer le deuxième modèle de saut dans le temps (140_2) et/ou modèle de saut en fréquence (140_2) sur base d'une partie des données contenues dans le premier modèle de saut dans le temps (140_1) et/ou modèle de saut en fréquence (14_1);
dans lequel le récepteur de données (110) est conçu pour générer le deuxième modèle de saut dans le temps (140_2) et/ou modèle de saut en fréquence (140_2) sur base de données de protection contre les erreurs ou d'une partie des données de protection contre les erreurs qui sont contenues dans les données contenues dans le premier modèle de saut dans le temps (140_1) et/ou modèle de saut en fréquence (140_1).

8. Récepteur de données (110) selon la revendication 7, dans lequel le récepteur de données (110) est conçu pour déterminer une longueur du deuxième modèle de saut dans le temps (140_2) et/ou modèle de saut en fréquence (140_2) à partir des données contenues dans le premier modèle de saut dans le temps (140_1) et/ou modèle de saut en fréquence (140_1).

9. Récepteur de données (110) selon l'une des revendications 7 à 8, dans lequel les données (120) comportent une pluralité de paquets de données (142_1:142_n), dans lequel le premier modèle de saut dans le temps (140_1) et/ou modèle de saut en fréquence (140_1) présente un nombre fixe de la pluralité de paquets de données (142_1:142_n), et dans lequel le deuxième modèle de saut dans le temps (140_2) et/ou modèle de saut en fréquence (140_2) présente un nombre variable de la pluralité de paquets de données (142_1:142_n).

10. Récepteur de données (110) selon l'une des revendications 7 à 9, dans lequel une partie des données contenues dans le premier modèle de saut dans le temps (140_1) et/ou modèle de saut en fréquence (140_1) est utilisée pour signaler la longueur du deuxième modèle de saut dans le temps (140_2) et/ou modèle de saut en fréquence (140_2);
dans lequel le récepteur de données (110) est conçu pour déterminer la longueur du deuxième modèle de saut dans le temps (140_2) et/ou modèle de saut en fréquence (140_2) à partir de la partie des données contenues dans le premier modèle de saut dans le temps (140_1) et/ou modèle de saut en fréquence (140_1).

11. Récepteur de données (110) selon l'une des revendications 7 à 10, dans lequel le récepteur de données (110) est conçu pour générer une séquence de synchronisation de référence sur base d'une partie des données contenues dans le premier modèle de saut dans le temps (140_1) et/ou modèle de saut en fréquence (140_1);
dans lequel le récepteur de données (110) est conçu pour recevoir les données (120) à recevoir à l'aide du deuxième modèle de saut dans le temps (140_2) et/ou modèle de saut en fréquence (140_2) à l'aide de la séquence de synchronisation de référence.

12. Système, aux caractéristiques suivantes:
un émetteur de données (100) selon l'une des revendications 1 à 6; et
un récepteur de données (110) selon l'une des revendications 7 à 11.

13. Procédé (220) pour envoyer des données de longueur variable, à l'étape suivante consistant à:
envoyer (222) les données de longueur variable à l'aide d'un premier modèle de saut dans le temps/en fréquence et un deuxième modèle de saut dans le temps/en fréquence, où le premier modèle de saut dans le temps/en fréquence présente une longueur fixe et le deuxième modèle de saut dans le temps/en fréquence présente une longueur variable;
dans lequel le deuxième modèle de saut dans le temps (140_2) et/ou modèle de saut en fréquence (140_2) est généré sur base d'une partie des données contenues dans le premier modèle de saut dans le temps (140_1) et/ou modèle de saut en fréquence (140_1); et
dans lequel le deuxième modèle de saut dans le temps (140_2) et/ou modèle de saut en fréquence (140_2) est généré sur base de données de protection contre les erreurs ou d'une partie des données de protection contre les erreurs qui sont contenues dans les données contenues dans le premier modèle de saut dans le temps (140_1) et/ou modèle de saut en fréquence (140_1).

14. Procédé (230) pour recevoir des données de longueur variable, à l'étape suivante consistant à:
recevoir (232) les données de longueur variable à l'aide d'un premier modèle de saut dans le temps/en fréquence et d'un deuxième modèle de saut dans le temps/en fréquence, où le premier modèle de saut dans le temps/en fréquence présente une longueur fixe et le deuxième modèle de saut dans le temps/en fréquence présente une longueur variable;
dans lequel le deuxième modèle de saut dans le temps (140_2) et/ou modèle de saut en fréquence (140_2) est généré sur base d'une partie des données contenues dans le premier modèle de saut dans le temps (140_1) et/ou modèle de saut en fréquence (140_1);
dans lequel le deuxième modèle de saut dans le temps (140_2) et/ou modèle de saut en fréquence (140_2) est généré sur base de données de protection contre les erreurs ou d'une partie des données de protection contre les erreurs contenues dans les données contenues dans le premier modèle de saut dans le temps (140_1) et/ou modèle de saut en fréquence (140_1).

15. Programme d'ordinateur, comportant des instructions qui, lorsque le programme est exécuté par l'ordinateur, amènent ce dernier à réaliser un procédé selon l'une des revendications 13 à 14.
